# EUROPEAN PATENT APPLICATION

(11) **EP 4 236 456 A1**
(43) Date of publication of application: **30.08.2023**
(21) Application number: 21883374.7
(22) Date of filing: 25.10.2021
(51) Int. Cl.: H04W 36/00, H04W 36/38, H04W 36/18, H04W 36/32

(54) **METHOD FOR MANAGING NETWORK SLICE REMAPPING**

(30) Priority: 23.10.2020 KR 20200138603; 04.11.2020 KR 20200146220; 18.02.2021 KR 20210022132
(71) Applicant: LG Electronics Inc., Yeongdeungpo-gu Seoul 07336 (KR)
(72) Inventor: KIM, Seokjung, Seoul 06772 (KR); YOUN, Myungjune, Seoul 06772 (KR); XU, Jian, Seoul 06772 (KR); BYUN, Daewook, Seoul 06772 (KR)
(74) Representative: Plasseraud IP
(86) International application number: PCT/KR2021/015040
(87) International publication number: WO 2022/086307

(57) **Abstract**

One disclosure of the present specification provides a method by which an access and mobility management function (AMF) performs communication. The method comprises the steps: receiving a first message from a source base station, wherein the first message includes information that a handover of a user equipment (UE) is required; transmitting a handover request message to a target base station, wherein the handover request message includes information on a first network slice related to a PDU session used by the LTE; receiving a second message from the target base station, wherein the second message includes remapping information, and the remapping information includes information that network slice remapping has been performed from the first network slice to a second network slice for the PDU session; transmitting, on the basis of the remapping information, an update request message for network slice information for the PDU session by using a session management function (SMF), wherein the network slice information is updated by means of a policy control function (PCF) and delivered to the UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### TECHNICAL PROBLEM

In the handover process of the terminal, when remapping is performed because the target base station does not support the network slice used before the handover, the problem is how the terminal can recognize this.

### TECHNICAL SOLUTION

The updated information may be transmitted to the terminal by making an information update request by the AMF.

### ADVANTAGEOUS EFFECTS

The present specification may have various effects.

For example, through the procedure disclosed in this specification, it is possible to increase communication efficiency by continuing to use the PDU session previously used by the terminal through network remapping.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows an example of network slice remapping during a registration procedure of a terminal.
FIGS. 6a and 6b show a first example of allocating a remapping policy to a UE in a PDU session establishment process.
FIGS. 7a and 7b show a second example of allocating a remapping policy to a UE in a PDU session establishment process.
FIGS. 8a and 8b show a third example of allocating a remapping policy to a UE in a PDU session establishment process.
FIGS. 9a and 9b show examples of network slice remapping during Xn handover.
FIGS. 10a and 10b show a first example of network slice remapping during NG handover.
FIGS. 11a and 11b show a second example of network slice remapping during NG handover.
FIG. 12 shows an example of network slice recovery.
FIGS. 13a and 13b show examples of network slice remapping during a service request.
FIG. 14 shows a first example of exchanging network slice remapping capability during Xn and NG configuration update.
FIG. 15 shows a second example of exchanging network slice remapping capability during Xn and NG configuration updates.
FIGS. 16a and 16b show an example of data forwarding for an unsupported network slice during Xn handover.
FIG. 17 shows an example of service interruption due to lack of network slice resources.
FIG. 18 shows an example of service interruption by an unsupported network slice.
FIG. 19 shows a first example of network slice remapping or fallback determined by the T-gNB.
FIG. 20 shows a second example of network slice remapping or fallback determined by the T-gNB.
FIG. 21 shows an example of network slice remapping or fallback determined by AMF.
FIG. 22 shows the procedure of AMF for the disclosure of this specification.
FIG. 23 shows the procedure of UE for the disclosure of this specification.

### BEST MODE

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

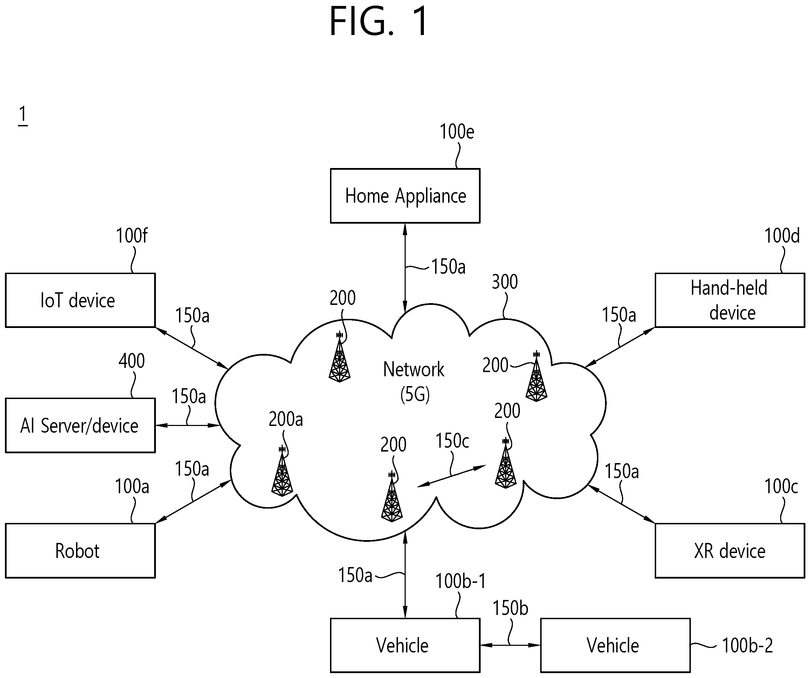

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

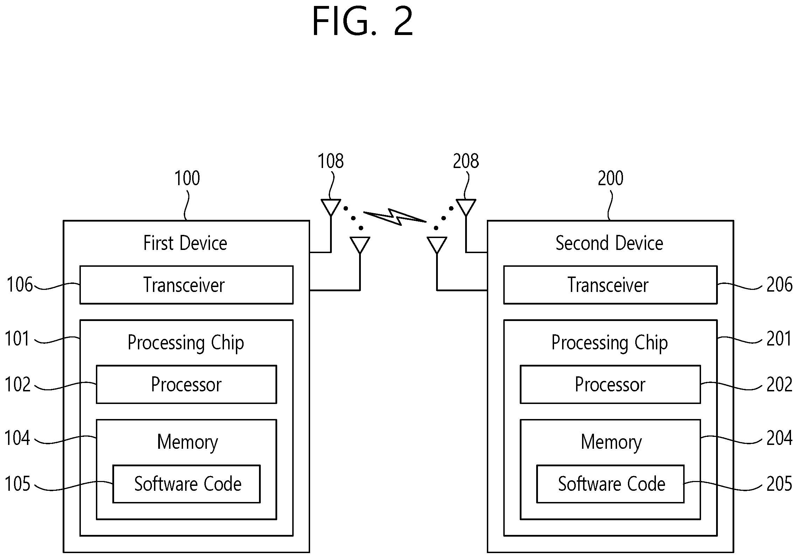

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

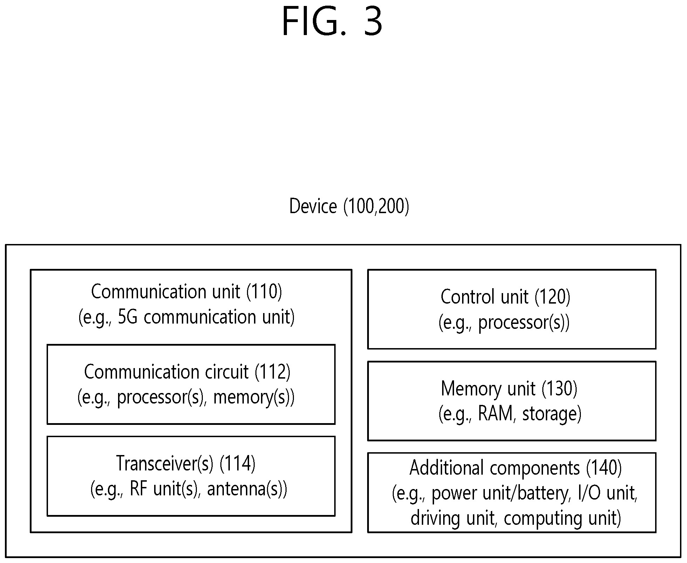

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

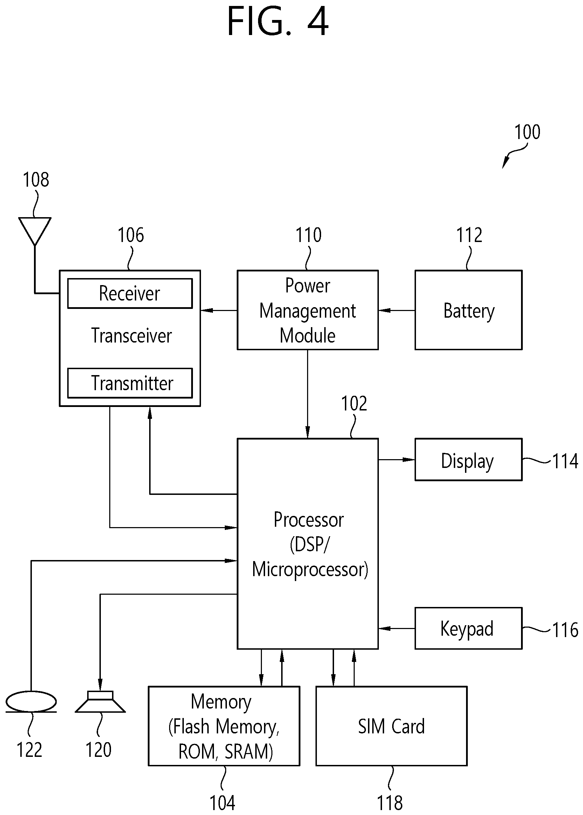

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

### <Network Slice>

Hereinafter, network slicing to be introduced in next-generation mobile communication will be described.

Next-generation mobile communication introduces the concept of network slicing in order to provide various services through one network. Here, network slicing is a combination of network nodes having functions necessary to provide a specific service. A network node constituting a slice instance may be a hardware independent node or a logically independent node.

Each slice instance may be composed of a combination of all nodes necessary to configure the entire network. In this case, one slice instance may provide a service to the UE alone.

Alternatively, a slice instance may be composed of a combination of some of the nodes constituting the network. In this case, the slice instance may provide a service to the UE in association with other existing network nodes without providing a service to the UE alone. In addition, a plurality of slice instances may provide services to the UE in association with each other.

A slice instance differs from a dedicated core network in that all network nodes including a core network (CN) node and a RAN can be separated. In addition, slice instances differ from dedicated core networks in that simply network nodes can be logically separated.

### <Problems to be solved in the disclosure of the present specification>

During the handover process, the target NG-RAN may not be able to continuously support the network slice currently being served to the UE by the source NG-RAN after handover. In this case, the PDU session related to the corresponding network slice must be released. However, in order to ensure the continuity of the service previously provided to the terminal, the network slice related to the corresponding PDU session may be re-mapped to a network slice that the target NG-RAN can support. At this time, the Target NG-RAN and the AMF include and transmit re-mapped network slice information in the Allowed NSSAI to be delivered to the UE. However, if the terminal does not know that the network slice associated with the corresponding PDU session has been re-mapped, the corresponding PDU session is eventually released because the information about network slice related to the PDU session currently in use is not included in the newly received Allowed NSSAI, which is a problem.

### <disclosure of this specification>

Hereinafter, network slice and S-NSSAI (single network slice selection assistance information) may be used interchangeably.

Certain steps in the procedures below may be performed concurrently or in parallel, or may be performed in reversed order.

The following drawings are made to explain a specific example of the present specification. Since the names of specific devices or names of specific signals/messages/fields described in the drawings are provided as examples, the technical features of the present specification are not limited to the specific names used in the drawings below.

### 1. Slice Remapping Policy Configuration Policy during Registration

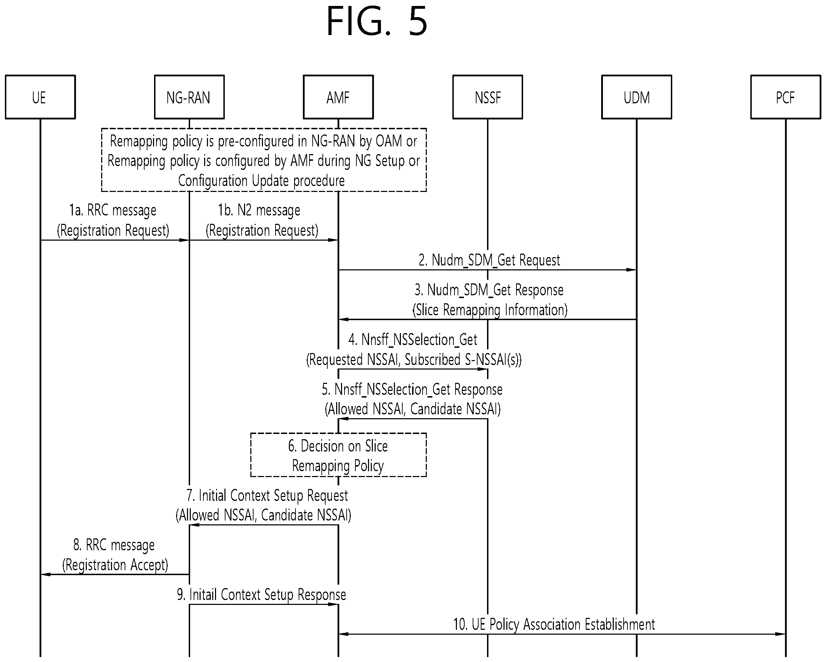

**FIG. 5** **shows an example of network slice remapping during a registration procedure of a terminal.**

FIG. 5 shows a method of allocating a network slice remapping policy to a terminal in a registration process.
0. A remapping policy for each network slice may be configured in advance in the NG-RAN through OAM (Operation, Management and Administration). Alternatively, the AMF may configure a remapping policy for each network slice in the NG-RAN through an NG Setup procedure or a Configuration Update procedure.
1. The terminal may transmit a Registration Request message including Requested NSSAI (Network Slice Selection Assistance information) to the network through RRC and N2 messages.
2. Upon receiving the registration request message from the terminal, the AMF may request subscription information for the terminal from an UDM (Unified Data Management) through a Nudm_SDM_Get Request message.
3. UDM delivers subscriber information about the terminal. In this case, the corresponding information may include information about network slice remapping as follows.
   - A network slice remapping indicator indicating whether network slice remapping is allowed for the terminal
   - Granularity (per UE, per slice, per PDU session) of the network slice policy (slice remapping policy) for the terminal
4. AMF may transmit information such as Requested NSSAI and Subscribed S-NSSAI(s) requested to NSSF (Network Slice Selection Function) and request allocation of Allowed NSSAI for the terminal.

At this time, when the network slice remapping indicator is received in step 3, the corresponding information may also be transmitted to the NSSF to inform that network slice remapping is possible for the terminal.

Note: In the process of the UE performing the Mobility Registration Update, if there are any PDU sessions previously created for the UE associated with the remapped network slice, S-NSSAI value for the corresponding remapped network slice may also be delivered to NSSF.

5. NSSF may determine the Allowed NSSAI for the UE based on the information received in step 4 and deliver it to the AMF. If network slice remapping is possible for the UE, Candidate NSSAI may also be determined and delivered to the AMF. Candidate NSSAI may mean NSSAI list that can be used for network slice remapping for the UE, generated by considering the subscribed S-NSSAI(s) of the UE and the S-NSSAI(s) that AMF can support.

Note: If the AMF can directly determine Allowed NSSAI or Candidate NSSAI according to the Operator's policy, steps 4 and 5 may be performed by the AMF rather than NSSF.

6. A network slice remapping policy may be generated for each UE or for each network slice according to the granularity of the network slice remapping policy received in step 3. At this time, the following information may be referred.
- Allowed NSSAI for the terminal and/or,
- Candidate NSSAI for the terminal and/or,
- List of S-NSSAI(s) supported by NG-RAN and/or,
- Operator's policy and/or;
- Whether NSSAA (Network Slice-Specific Authentication and Authorization) is required for that network slice, etc.

In step 0, when the NG-RAN already has a remapping policy for each network slice, step 6 may be omitted or the remapping policy generated in step 6 may be updated.

7. In order to notify the UE of registration acceptance and create a UE context in NG-RAN, AMF may send an Initial Context Setup Request message including a Registration Accept message to NG-RAN.

Also, AMF may deliver the candidate NSSAI determined in step 5 to NG-RAN. When network slice remapping occurs in a subsequent handover process, NG-RAN may refer to candidate NSSAI. Through the Candidate NSSAI, the NG-RAN may avoid the case where the UE selects an unusable S-NSSAI as a remapped network slice.

If the AMF determines a new network slice remapping policy in step 6, the AMF may deliver it to the NG-RAN so that the NG-RAN can refer to it in a handover process that will occur later.

Note: It is also possible for AMF to send configured NSSAI to NG-RAN instead of candidate NSSAI. In this case, the NG-RAN may refer to the configured NSSAI and the List of S-NSSAI(s) supported by AMF in the network slice remapping process.

Note: A Downlink NAS Transport message may be used instead of an Initial Context Setup Request message.

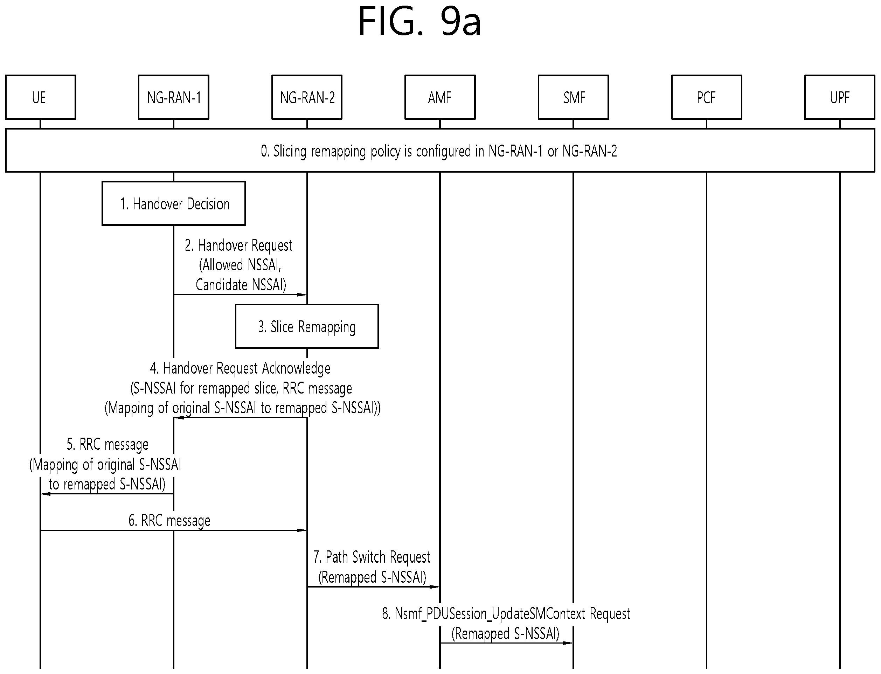

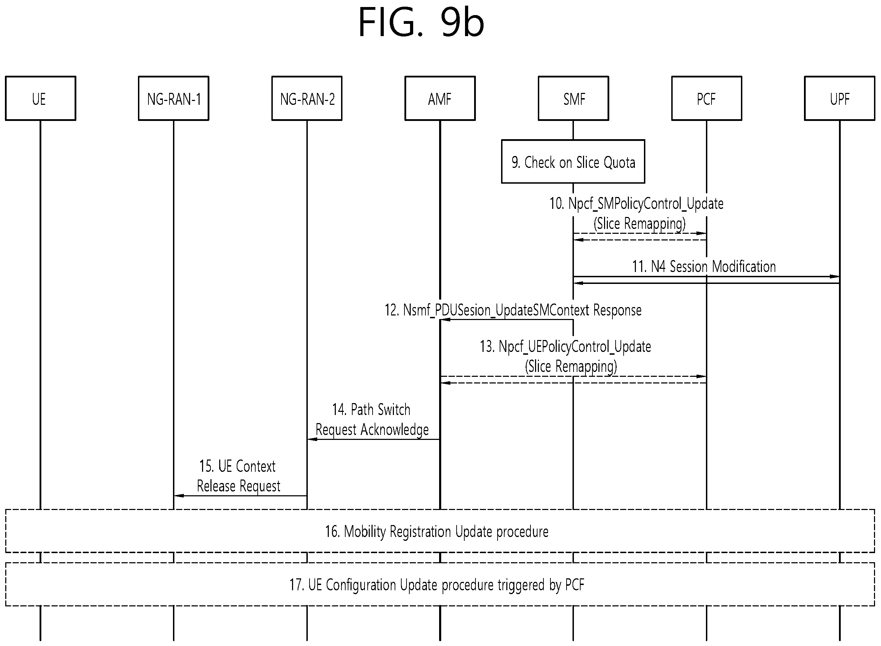

Note: AMF may include network slice remapping policy information in a Registration Accept message or other NAS message transmitted to the terminal. In this case, when the UE recognizes that network slice remapping has occurred as shown in FIGS. 9, 10a, 10b, 11a and 11b, a new S-NSSAI may be selected according to the network slice remapping policy and included in the PDU Session Establishment Request when creating a new PDU session related to the original S-NSSAI.

Alternatively, in step 8, the NG-RAN may transmit network slice remapping policy information to the UE using an RRC message.

8. NG-RAN may deliver, to the UE, the Registration Accept message received from AMF in step 7.

9. The NG-RAN that created the UE context may respond to the AMF with an Initial Context Setup Response message.

10. AMF may create a PCF and UE Policy Association. In this process, the PCF may request the AMF to notify itself when network slice remapping for the UE occurs. This is for the PCF to update the URSP for the original S-NSSAI and Remapped S-NSSAI and deliver it to the UE.

### 2. Remapping Policy Configuration During PDU Session Establishment

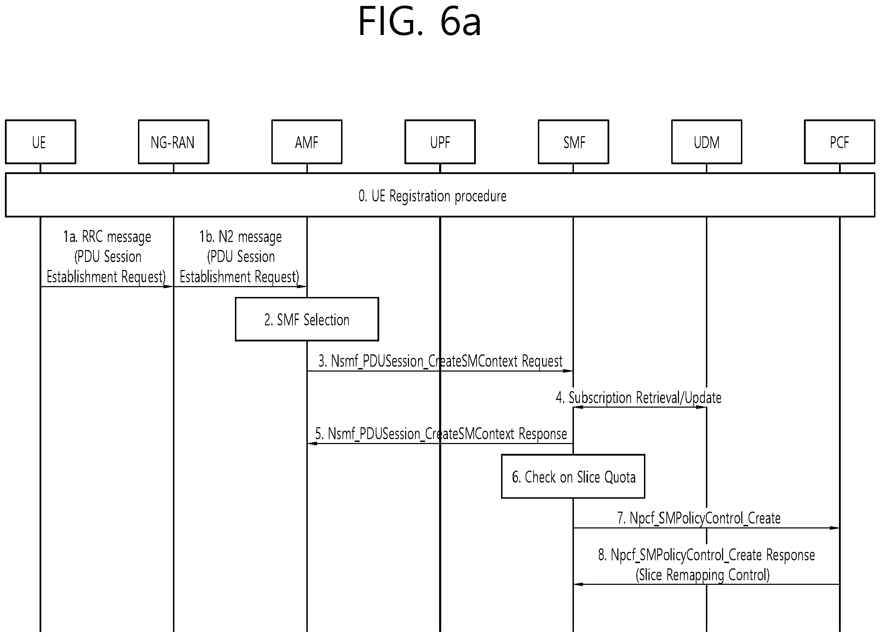

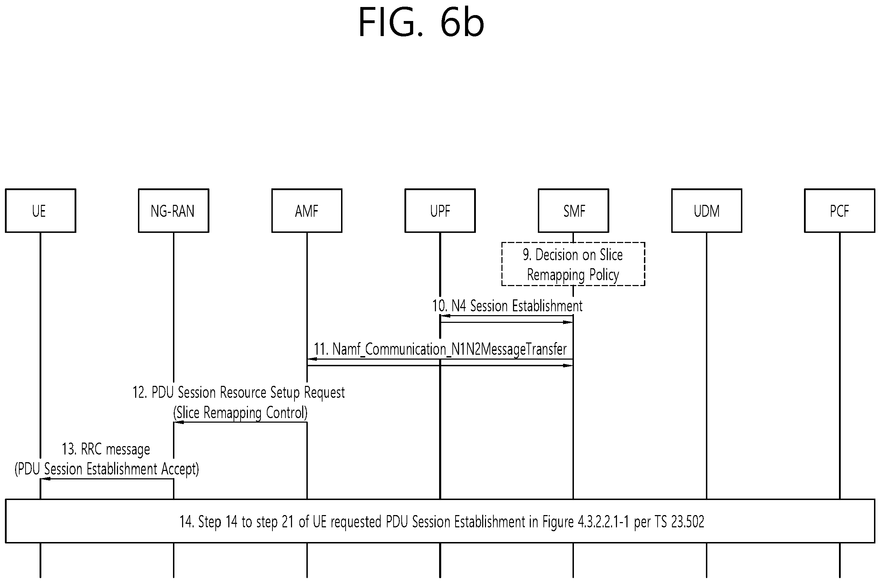

**FIGS. 6a** **and** **6b** **show a first example of allocating a remapping policy to a UE in a PDU session establishment process.**
0. The terminal is already registered in the network according to the procedure in FIG. 5 or Figure 4.2.2.2.2-1 of TS 23.502 (3GPP TS 23.502 V16.6.0).
1. The terminal may transmit a PDU Session Establishment Request message to the network through RRC and N2 messages in order to receive service from the corresponding network.
2. AMF may select an SMF to be in charge of the corresponding PDU session. At this time, if the AMF knows that network slice remapping is permitted for the UE, AMF may select an SMF capable of supporting network slice remapping.

Note: Information on SMF capable of supporting network slice remapping may be configured in AMF or included in subscription information of UDM. Alternatively, the AMF may perform SMF discovery through a NRF (Network Repository Function). At this time, the AMF may also transmit information such as a network slice remapping indicator indicating whether network slice remapping is allowed for the UE to the NRF. Based on this, the NRF may deliver information about the SMF capable of supporting network slice remapping to the AMF. In this process, the NRF may also deliver a network slice list that each SMF can support to the AMF. Corresponding information may be configured in advance in the NRF, or may be stored together when the SMF registers with the NRF.

AMF, not SMF, may generate a network slice remapping policy for the UE. In this case, the AMF must determine a network slice remapping policy so that a remapped S-NSSAI that the corresponding SMF can support is selected among the network slice list received through the NRF. The AMF can also receive network slice list information that the corresponding SMF can support directly from the SMF in step 11, not from the NRF.

3. AMF may request to create context for the corresponding PDU session by sending Nsmf_PDUSession_CreateSMContext Request to SMF.

Note: SMF may create a network slice remapping policy for each PDU session. In this case, AMF may deliver Candidate NSSAI or Configured NSSAI information to SMF together. Alternatively, when the AMF creates a network slice remapping policy for each PDU session, delivery of corresponding information may be omitted.

4. If there is no session management subscription data for the corresponding PDU session, the SMF may obtain the corresponding information from the UDM. Session management subscription data information may include the following contents.
- Request for network slice remapping policy allocation for the corresponding PDU session or S-NSSAI+DNN

5. The SMF may accept the creation of a context for the corresponding PDU session. In this case, SMF may respond to AMF with Nsmf_PDUSession_CreateSMContext Response.

6. SMF can check whether the quota allocated to the S-NSSAI related to the current PDU session exceeds the maximum value through signaling with the NF that manages the network slice limit (Slice Quota).

Note: If the NF managing the network slice quota is PCF, step 6 may be omitted. At this time, the SMF can check the network slice limit (Slice quota) through steps 7 and 8. Alternatively, if the NF managing the network slice limit (Slice Quota) is an AMF or an NF directly connected to the AMF, the network slice limit (Slice Quota) may be checked immediately after step 2.

7. If the quota for S-NSSAI does not exceed the maximum value, the SMF may request the SM policy for the corresponding PDU session by sending an Npcf_SMPolicyControl_Create Request to the PCF.

8. The PCF may assign an SM policy for the corresponding PDU session to the SMF. At this time, network slice remapping control information may also be delivered to the SMF. Network slice remapping control information may include the following contents.
- If the original S-NSSAI, which was unavailable in NG-RAN, becomes available again, information that can be referred to when determining PDU session and the remapped S-NSSAI to be restored to the original S-NSSAI in NG-RAN (e.g., the corresponding PDU session ARP (Allocation and Retention Priority) or priority, etc.)
- Notification request to inform the PCF when network slice remapping for the corresponding PDU session occurs in the NG-RAN
- Information on whether network slice remapping for the corresponding PDU session is allowed

9. According to the network slice remapping policy assignment request received in step 4, the SMF may create a network slice remapping policy for the corresponding PDU session. At this time, the following information may be referred.
- original S-NSSAI for that PDU session and/or,
- Candidate NSSAI for the terminal and/or,
- Slice Remapping Control from PCF and/or
- Operator's policy and/or;
- Whether NSSAA is required for that network slice
- A list of network slices that the corresponding SMF can support, etc.

Note: Even if the network slice remapping policy for the UE has already been assigned during the registration process, the corresponding PDU session can be updated with the remapping policy generated in step 9.

Note: If AMF, not SMF, creates a network slice remapping policy for the corresponding PDU session, the corresponding process may be executed after step 11. In this case, the SMF may transmit information related to remapping (e.g., Slice Remapping Control) to the AMF in step 11 so that the AMF can generate a network slice remapping policy.

Note: The SMF may include information such as the type (e.g., IMS voice, internet) or priority of the service provided through the corresponding PDU session in the network slice remapping policy. Alternatively, the SMF may be delivered to the NG-RAN in the form of a separate indication.

10. The SMF may create a data transmission tunnel to the NG-RAN by transferring the AN Tunnel Info for N3 tunnel information received in step 3 to the UPF using the N4 Session Establishment procedure.

11. The SMF may request resource allocation in the NG-RAN for the corresponding PDU session from the AMF through the Namf_Communication_N1N2MessageTransfer message. At this time, network slice remapping control information received from the PCF may be transmitted to the NG-RAN through the AMF.

When the SMF creates a network slice remapping policy for the corresponding PDU session, the network slice remapping policy created in step 9 may be transmitted to the AMF together.

In addition, the Namf_Communication_N1N2MessageTransfer message may also include a PDU Session Establishment Accept message to be delivered to the terminal.

In addition, when the UE transfers the PDN connection serviced by the EPS to the 5GS, the SMF may add an indication notifying the NG-RAN through the AMF. Upon receiving the corresponding indication, the NG-RAN may know that the corresponding PDU session is being transferred from EPS to 5GS. Therefore, in order to continue to provide services to the UE through the corresponding PDU session, when the original S-NSSAI is not available in the NG-RAN (e.g., network slice resource shortage or non-supported slice), network slice remapping for the corresponding PDU session is executed unconditionally. Note: An indication indicating that the corresponding PDU session has been transferred from EPS to 5GS may be transmitted to the NG-RAN through steps 11 and 12. Alternatively, in step 9, it may be included in a network slice remapping policy and transmitted.

12. The AMF may transmit the resource allocation request for the PDU session received from the SMF in step 11 to the NG-RAN. At this time, it may be delivered including a PDU Session Establishment Accept message to be delivered to the UE.

Note: AMF may include network slice remapping policy information in a PDU Session Establishment Accept message or other NAS message transmitted to the terminal. In this case, when the UE recognizes that network slice remapping has occurred as shown in FIGS. 9a, 9b, 10a, 10b, or 11a and 11b, when the UE creates a new PDU session related to the original S-NSSAI later, a new S-NSSAI may be selected according to the network slice remapping policy and included in the PDU Session Establishment Request.

Alternatively, in step 13, the NG-RAN may transmit network slice remapping policy information to the UE using an RRC message.

13. NG-RAN may allocate resources for the corresponding PDU session according to SMF request. In addition, the PDU Session Establishment Accept message received from the AMF in step 12 may be delivered to the UE.

14. Among the PDU session establishment procedures in Figure 4.3.2.2.1-1 in TS 23.502 (3GPP TS 23.502 V16.6.0), steps 14 to 21 may be executed.

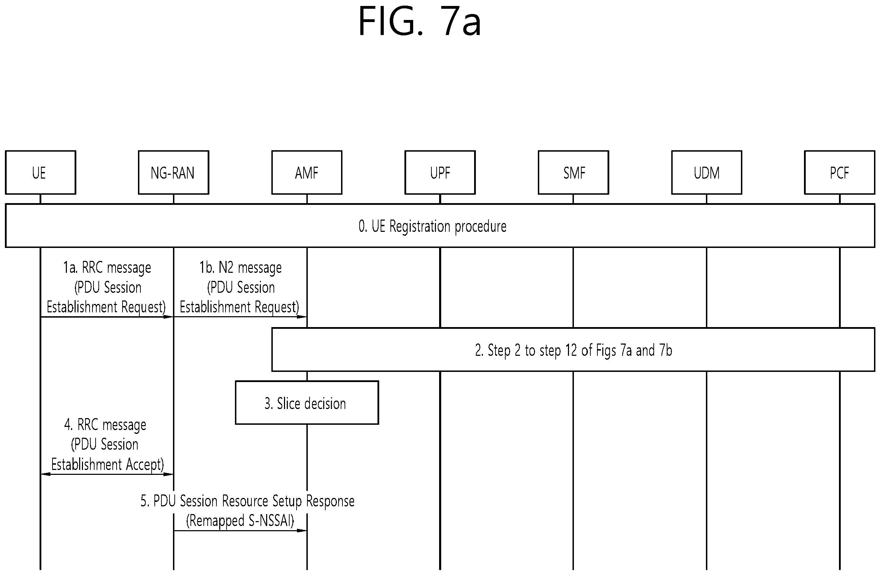

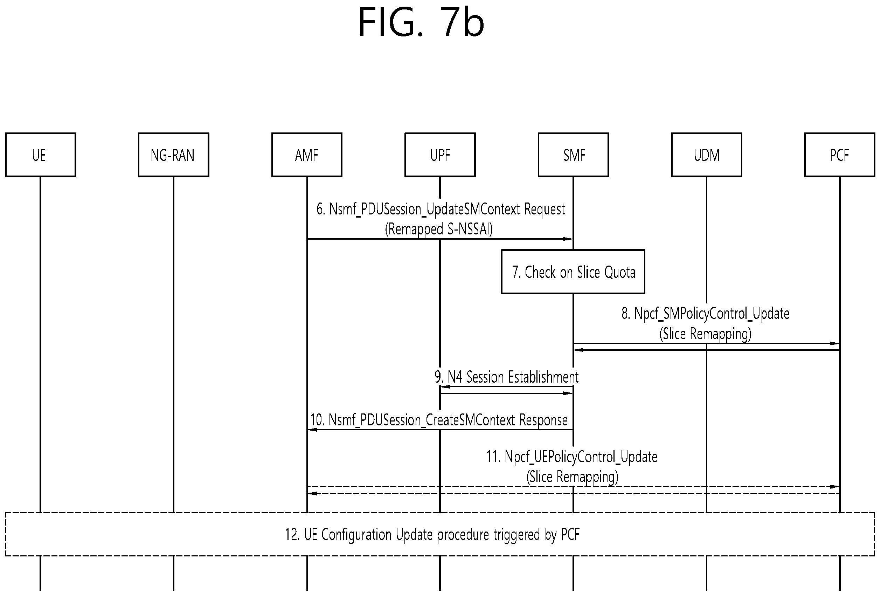

**FIGS. 7a** **and** **7b** **show a second example of allocating a remapping policy to a UE in a PDU session establishment process.**

FIGS. 7a and 7b show a method of allocating a network slice policy (Slice remapping policy) to a UE in a PDU Session Establishment process and allocating a remapped S-NSSAI instead of the S-NSSAI requested by the UE by the NG-RAN.
0. The terminal is already registered in the network according to the procedure in FIG. 5 or Figure 4.2.2.2.2-1 of TS 23.502 (3GPP TS 23.502 V16.6.0).
1. The terminal may transmit a PDU Session Establishment Request message to the network through RRC and N2 messages in order to receive service from the corresponding network.
2. Execute steps 2 to 12 in FIGS. 6a and 6b.
3. The NG-RAN may create a UE context based on information received from the AMF and allocate resources for the corresponding PDU session according to the SMF request.
   In addition, if the original S-NSSAI for the corresponding PDU session cannot be supported, or if the resources for the original S-NSSAI are insufficient within the NG-RAN, the NG-RAN may determine a remapped S-NSSAI for the corresponding PDU.
4. The NG-RAN may deliver the PDU Session Establishment Accept message received from the AMF to the UE.

In addition, Mapping of original S-NSSAI to remapped S-NSSAI information may be included in the RRC message to be delivered to the UE. Through the corresponding information, since the original S-NSSAI cannot be used in the NG-RAN, the UE may be notified that the remapped S-NSSAI should be used instead. Therefore, when the UE tries to create a new PDU session related to the original S-NSSAI later, the UE includes the Remapped S-NSSAI instead of the original S-NSSAI in the PDU Session Establishment Request message.

Alternatively, a network slice remapping policy used for network slice remapping may be included in the RRC message. Through the corresponding information, it is possible to inform the UE that the original S-NSSAI cannot be used in the NG-RAN. If the terminal subsequently wants to create a new PDU session related to the original S-NSSAI, the UE may select the new S-NSSAI according to the network slice remapping policy and include it in the PDU Session Establishment Request.

Alternatively, in FIGS. 5 or 6a and 6b, when the UE receives a network slice remapping policy from the network in advance, network slice remapping occurs, therefore, the RRC message may include only indication that the original S-NSSAI is unavailable in the NG-RAN. If the terminal later wants to create a new PDU session related to the original S-NSSAI, it may select the new S-NSSAI according to the network slice remapping policy and include it in the PDU Session Establishment Request.

Alternatively, information related to network slice remapping may not be included in the RRC message.

Note: Instead of delivering Mapping of original S-NSSAI to remapped S-NSSAI information to the terminal through an RRC message as in step 4, it is also possible to inform the terminal of the corresponding information through a NAS message after step 5.

Alternatively, the URSP rule for the original S-NSSAI and the remapped S-NSSAI may be updated to the UE through steps 11 and 12.

5. After creating a UE context and completing resource allocation for the PDU session, the NG-RAN may respond to the AMF with a PDU Session Resource Setup Response message.

At this time, if NG-RAN determines network slice remapping in step 3, it may include the remapped S-NSSAI for the corresponding PDU session and the reason for this (Slice resource shortage or non-supported slice) and transmit it to AMF.

6. AMF may check the S-NSSAI related to the PDU session list included in the PDU Session Resource Setup Response message by the NG-RAN and the reason for the above. In addition, a context update for a corresponding PDU session may be requested from each SMF through an Nsmf_PDUSession_UpdateSMContext Request message. If NG-RAN determines network slice remapping for the corresponding PDU session in step 3, AMF may include the remapped S-NSSAI and the reason for it (Slice resource shortage or non-supported slice) and transmit it to SMF. can

7. If the NG-RAN determines network slice remapping for the corresponding PDU session in step 3, the SMF may check whether the quota allocated to the S-NSSAI related with the current PDU session exceeds the maximum value through signaling with the NF that manages the network slice quota.

If the quota for the corresponding S-NSSAI exceeds the maximum value, steps 8 and 9 may be omitted.

Note: If the NF that manages the network slice quota is PCF, step 7 may be skipped and the network slice quota may be checked through step 8. Alternatively, if the NF managing the network slice quota is an AMF or an NF directly connected to the AMF, the network slice quota may be checked immediately after step 5.

8. If the quota does not exceed the maximum value in step 7, the SMF may request an SM policy update for the corresponding PDU session from the PCF through Npcf_SMPolicyControl_Update. At this time, it is notified to the PCF that network slice remapping has occurred for the corresponding PDU session, and the S-NSSAI selected in step 3 may be delivered together.

9. The SMF transmits the AN Tunnel Info for N3 tunnel information received in step 6 to the UPF using the N4 Session Establishment or N4 Session Modification procedure to establish a data transmission tunnel to the NG-RAN.

10. SMF may inform AMF that the content requested by AMF has been successfully processed by using Nsmf_PDUSession_UpdateSMContext Response or other messages.

If the quota exceeds the maximum value in step 7, AMF may be notified that the context update for the corresponding PDU session has failed, and the reason (i.e., slice quota limit) may be delivered together. In addition, a wait timer value may be set and transmitted together to prevent the NG-RAN from performing remapping or recovery to the corresponding network slice for a certain period of time.

Note: The wait timer value itself may be configured in advance in the NG-RAN, and when a cause value related to the slice quota limit is received from AMF, the corresponding wait timer may be operated.

11. When the AMF receives a notification request for network slice remapping from the PCF during the registration process, the PCF may be informed that network slice remapping has occurred through Npcf_UEPolicyControl_Update. At this time, the AMF may deliver the S-NSSAI selected in step 3 to the PCF as well.

Note: PCF in charge of UE policy and PCF in charge of SM policy may be different.

12. If the PCF receives a network slice recovery or network slice remapping situation in step 11, the PCF may trigger UE configuration update procedure for updating URSP rule related to the original S-NSSAI and remapped S-NSSAI.

For example, in a situation where the network slice for PDU session #1 for which APP #1 was receiving service was remapped from S-NSSAI-A to S-NSSAI-B, even if App #2 newly want to use the service for Slice B, the URSP rule may be updated so that PDU Session #1 can be used equally. However, if the network slice for PDU session #1 is returned to S-NSSAI-A, App #2 cannot use PDU session #1, so creating a new PDU Session #2 for S-NSSAI-B is required to provide service for slice B.

Alternatively, in a situation where the network slice for PDU session #1 for which APP #1 was receiving service is remapped from S-NSSAI-A to S-NSSAI-B, if App #2 newly wants to use service for Slice B, the URSP rule may be updated to create a new PDU Session #2 for S-NSSAI-B.

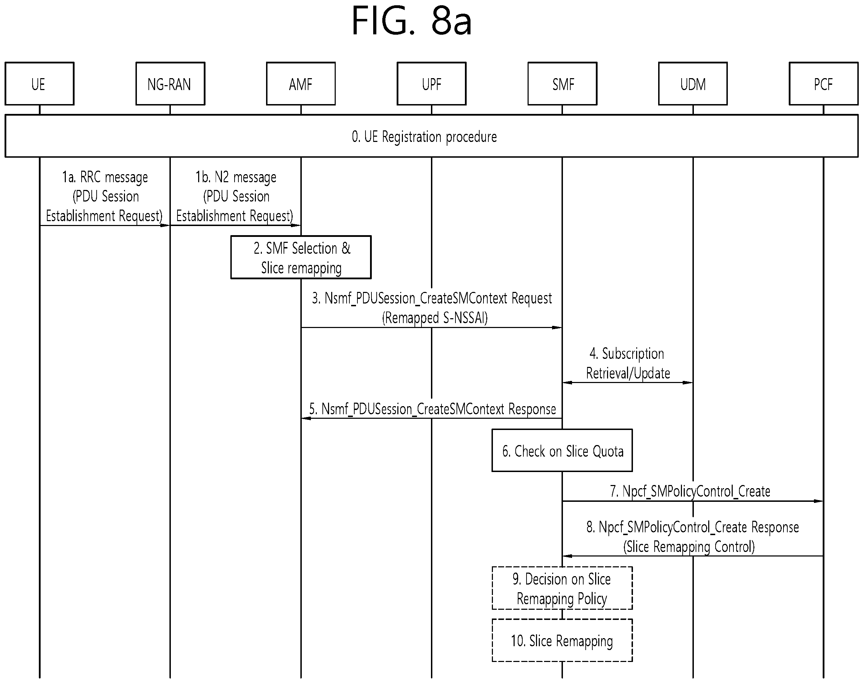

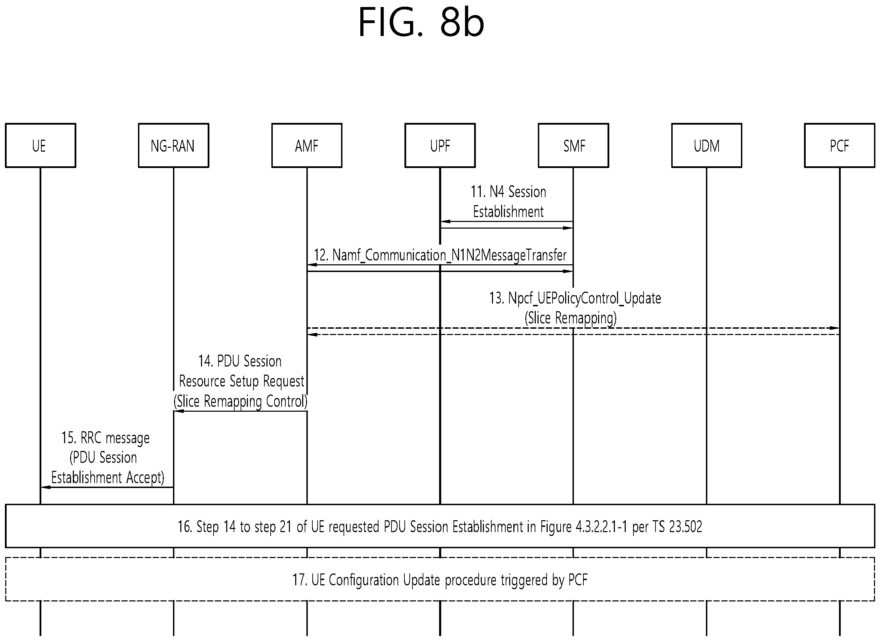

**FIGS. 8a** **and** **8b** **show a third example of allocating a remapping policy to a UE in a PDU session establishment process.**

FIGS. 8a and 8b show a method for allocating a network slice remapping policy to a UE in a PDU Session Establishment process and for AMF or SMF to allocate a remapped S-NSSAI instead of the S-NSSAI requested by the UE.
0. The terminal is already registered in the network according to the procedure in FIG. 5 or Figure 4.2.2.2.2-1 of TS 23.502 (3GPP TS 23.502 V16.6.0).
1. The terminal may transmit a PDU Session Establishment Request message to the network through RRC and N2 messages in order to receive service from the corresponding network.
2. AMF may select an SMF to be in charge of the corresponding PDU session. At this time, if the AMF knows that network slice remapping is permitted for the UE, it can select an SMF capable of supporting network slice remapping.

In addition, when the AMF knows that the S-NSSAI requested by the UE must be remapped (for example, when the NG-RAN does not support the S-NSSAI requested by the UE, or the AMF is notified in advance that resources for NSSAI requested by the UE in the NG-RAN are insufficient), remapped S-NSSAI may be selected based on a network slice remapping policy per UE or per network slice.

Note: Information on SMF capable of supporting network slice remapping may be configured in AMF or included in subscription information of UDM. Alternatively, when the AMF performs SMF discovery through the NRF, the AMF may transmit information such as a network slice remapping indicator indicating whether network slice remapping is allowed for the UE to the NRF together. Based on this, the NRF may deliver information about the SMF capable of supporting network slice remapping to the AMF. In this process, a list of network slices that each SMF can support may be delivered together. Corresponding information may be configured in advance in the NRF, or may be stored together when the SMF registers with the NRF.

If an AMF other than the SMF creates a network slice remapping policy for the UE, network slice remapping policy must be determined for the remapped S-NSSAI to be selected from the list of network slices received through the NRF that the corresponding SMF can support. The AMF may also receive network slice list information that the corresponding SMF can support directly from the SMF in step 11, not from the NRF.

Note: AMF knows that the S-NSSAI requested by the UE needs to be remapped, but if it knows that the network slice remapping policy should be determined per PDU session, the AMF may transmit indication that network slice remapping instead of the Remapped S-NSSAI in step 3 is required and the reason for remapping(when the NG-RAN does not support the S-NSSAI requested by the UE or when the AMF is notified in advance that the resource for the S-NSSAI requested by the UE in the NG-RAN is insufficient) together.

Alternatively, after receiving the network slice remapping policy per PDU session from the SMF in step 12, the AMF may determine the Remapped S-NSSAI, inform the SMF again using Nsmf_PDUSession_UpdateSMContext, and perform network slice quota check for Remapped S-NSSAI through the same process as in step 6. If the quota check passes, the remapped S-NSSAI and the reason for remapping may be notified to the PCF in charge of SM policy through Npcf_SMPolicyControl_Update.

Note: AMF may transmit original S-NSSAI, candidate NSSAI (or configured NSSAI), and allowed NSSAI to NSSF and request a remapped S-NSSAI for the corresponding PDU session to NSSF.

3. AMF may request context creation for the corresponding PDU session by sending Nsmf_PDUSession_CreateSMContext Request to SMF.

In addition, when the AMF executes network slice remapping for the corresponding PDU session in step 2, the Remapped S-NSSAI is notified to the SMF.

Note: If the SMF creates a network slice remapping policy for each PDU session, the AMF may deliver Candidate NSSAI or Configured NSSAI information to the SMF together. Alternatively, when the AMF creates a network slice remapping policy for each PDU session, delivery of corresponding information may be omitted.

4. If there is no session management subscription data for the corresponding PDU session, the SMF may obtain the corresponding information from the UDM. Session management subscription data information may include the following contents.
- Request for network slice remapping policy allocation for the corresponding PDU session or S-NSSAI+DNN

5. The SMF may respond to the AMF with Nsmf_PDUSession_CreateSMContext Response if it can accept context creation for the corresponding PDU session.

6. The SMF may check whether the quota allocated to the S-NSSAI related to the current PDU session exceeds the maximum value through signaling with the NF that manages the network Slice Quota.

Note: If the NF that manages the network slice quota is PCF, step 6 may be skipped and the network slice quota may be checked through steps 7 and 8. Alternatively, if the NF managing the network Slice Quota is an AMF or an NF directly connected to the AMF, the network Slice Quota may be checked immediately after step 2.

7. If the quota for the S-NSSAI does not exceed the maximum value, the SMF may request the SM policy for the corresponding PDU session by sending an Npcf_SMPolicyControl_Create Request to the PCF.

8. The PCF may assign an SM policy for the corresponding PDU session to the SMF. At this time, network slice remapping control information may also be delivered to the SMF. Network slice remapping control information may include the following contents.
- If the original S-NSSAI, which was unavailable in NG-RAN, becomes available again, information that can be referred to when determining PDU session and the remapped S-NSSAI to be restored to the original S-NSSAI in NG-RAN (e.g., the corresponding PDU session ARP (Allocation and Retention Priority) or priority, etc.)
- Notification request to inform the PCF when network slice remapping for the corresponding PDU session occurs in the NG-RAN
- Information on whether network slice remapping for the corresponding PDU session is allowed

9. According to the network slice remapping policy assignment request received in step 4, the SMF may create a network slice remapping policy for the corresponding PDU session. At this time, the following information may be referred.
- original S-NSSAI for that PDU session and/or,
- Candidate NSSAI for the terminal and/or,
- Slice Remapping Control from PCF and/or
- Operator's policy and/or;
- Whether NSSAA is required for that network slice
- A list of network slices that the corresponding SMF can support, etc.

Note: Even if the network slice remapping policy for the UE has already been assigned during the registration process, the corresponding PDU session can be updated with the remapping policy generated in step 9.

If AMF, not SMF, creates a network slice remapping policy for the corresponding PDU session, the corresponding process may be executed after step 12. In this case, the SMF may transmit information related to remapping (e.g., Slice Remapping Control) to the AMF in step 12 so that the AMF can generate a network slice remapping policy. In this process, a list of network slices that can be supported by the corresponding SMF may be delivered together.

The SMF may include information such as the type (e.g., IMS voice, internet) or priority of the service provided through the corresponding PDU session in the network slice remapping policy. Alternatively, the SMF may be delivered to the NG-RAN in the form of a separate indication.

10. When the SMF receives an indication from the AMF that network slice remapping is required in step 3, the remapped S-NSSAI may be determined instead of the original S-NSSAI for the corresponding PDU session. After determining the remapped S-NSSAI, the SMF performs a network slice quota check as in step 6. If it passes, the SMF may inform the remapped S-NSSAI and the reason for remapping are sent to the PCF in charge of the SM policy through Npcf_SMPolicyControl_Update.

11. The SMF may create a data transmission tunnel to the NG-RAN by transferring the AN Tunnel Info for N3 tunnel information received in step 3 to the UPF using the N4 Session Establishment procedure.

12. The SMF may request resource allocation in the NG-RAN for the corresponding PDU session from the AMF through the Namf_Communication_N1N2MessageTransfer message. At this time, network slice remapping control information received from the PCF may be transmitted to the NG-RAN through the AMF. In addition, when network slice remapping occurs in step 10 instead of step 2, the remapped S-NSSAI information may also be delivered to the AMF.

In addition, the corresponding message may also include a PDU Session Establishment Accept message to be delivered to the terminal. Remapped S-NSSAI information determined in step 2 or step 10 may be included in the PDU Session Establishment Accept message delivered to the terminal.

In addition, when the UE transfers the PDN connection serviced by the EPS to the 5GS, the SMF may add an indication notifying the NG-RAN through the AMF. Upon receiving the corresponding indication, the NG-RAN may know that the corresponding PDU session is being transferred from EPS to 5GS. Therefore, in order to continue to provide services to the UE through the corresponding PDU session, when the original S-NSSAI is not available in the NG-RAN (e.g., network slice resource shortage or non-supported slice), network slice remapping for the corresponding PDU session is executed.

Note: An indication indicating that the corresponding PDU session has been transferred from EPS to 5GS may be transmitted to the NG-RAN through steps 12 and 14. Alternatively, in step 9, it may be included in a network slice remapping policy and transmitted.

13. When the AMF receives a notification request for network slice remapping from the PCF during the registration process, the AMF notifies the PCF that network slice remapping has occurred through Npcf_UEPolicyControl_Update, and transmits the remapped S-NSSAI together.

NOTE: A PCF in charge of UE policy and a PCF in charge of SM policy may be different.

14. The AMF may transmit the resource allocation request for the PDU session received from the SMF in step 12 to the NG-RAN. At this time, it may be delivered including a PDU Session Establishment Accept message to be delivered to the UE.

In addition, remapped S-NSSAI information for the corresponding PDU session may be included and transmitted.

AMF may include network slice remapping policy information in a PDU Session Establishment Accept message or other NAS message transmitted to the terminal. In this case, when the UE recognizes that network slice remapping has occurred as shown in FIGS. 9a, 9b, 10a, 10b, or 11a and 11b, when the UE creates a new PDU session related to the original S-NSSAI later, a new S-NSSAI may be selected according to the network slice remapping policy and included in the PDU Session Establishment Request.

Alternatively, in step 15, the NG-RAN may transmit network slice remapping policy information to the UE using an RRC message.

Note: As shown in FIGS. 7a and 7b, the NG-RAN may perform additional network slice remapping when S-NSSAI resources for the corresponding PDU session are insufficient.

15. NG-RAN may allocate resources for the corresponding PDU session according to SMF request. In addition, the PDU Session Establishment Accept message received from the AMF in step 12 may be delivered to the UE.

Instead of including Remapped S-NSSAI information in the PDU Session Establishment Accept message delivered to the UE in step 12, Mapping of original S-NSSAI to remapped S-NSSAI information may be included in the RRC message to be delivered to the UE through NG-RAN. Through the corresponding information, since the original S-NSSAI cannot be used in the NG-RAN, the UE may be notified that the remapped S-NSSAI should be used instead. Therefore, when the UE tries to create a new PDU session related to the original S-NSSAI later, the UE includes the Remapped S-NSSAI instead of the original S-NSSAI in the PDU Session Establishment Request message.

Alternatively, a network slice remapping policy used for network slice remapping may be included in the RRC message. Through the corresponding information, it is possible to inform the UE that the original S-NSSAI cannot be used in the NG-RAN. If the terminal subsequently wants to create a new PDU session related to the original S-NSSAI, the UE may select the new S-NSSAI according to the network slice remapping policy and include it in the PDU Session Establishment Request.

Alternatively, in FIGS. 5 or 6a and 6b, when the UE receives a network slice remapping policy from the network in advance, network slice remapping occurs, therefore, the RRC message may include only indication that the original S-NSSAI is unavailable in the NG-RAN. If the terminal later wants to create a new PDU session related to the original S-NSSAI, it may select the new S-NSSAI according to the network slice remapping policy and include it in the PDU Session Establishment Request.

Alternatively, information related to network slice remapping may not be included in the RRC message at all.

Note: URSP rules for original S-NSSAI and remapped S-NSSAI may be updated to the UE through steps 13 and 17.

16. Among the PDU session establishment procedures in Figure 4.3.2.2.1-1 in TS 23.502 (3GPP TS 23.502 V16.6.0), steps 14 to 21 may be executed.

17. If the PCF receives network slice remapping event in step 13, the PCF may trigger UE configuration update procedure for updating URSP rule related to the original S-NSSAI and remapped S-NSSAI.

Note: For example, in a situation where the network slice for PDU session #1 for which APP #1 was receiving service was remapped from S-NSSAI-A to S-NSSAI-B, even if App #2 newly want to use the service for Slice B, the URSP rule may be updated so that PDU Session #1 can be used equally. However, if the network slice for PDU session #1 is returned to S-NSSAI-A, App #2 cannot use PDU session #1, so creating a new PDU Session #2 for S-NSSAI-B is required to provide service for slice B.

Alternatively, in a situation where the network slice for PDU session #1 for which APP #1 was receiving service is remapped from S-NSSAI-A to S-NSSAI-B, if App #2 newly wants to use service for Slice B, the URSP rule may be updated to create a new PDU Session #2 for S-NSSAI-B.

### 3. Network slice remapping during Xn handover

**FIGS. 9a** **and** **9b** **show examples of network slice remapping during Xn handover.**

FIGS. 9a and 9b show a method in which a target NG-RAN remaps a network slice for a specific PDU session in an Xn-based handover process.
0. It is assumed that the network slice remapping policy for the terminal is already configured in NG-RAN-1 or NG-RAN-2 through a registration or PDU session establishment procedure.
1. NG-RAN-1 may decide to handover the UE to NG-RAN-2.
2. NG-RAN-1 may transmit a Handover Request message to NG-RAN-2. At this time, allowed NSSAI and candidate NSSAI information for the terminal may be included.
   Note: If configured NSSAI is received instead of candidate NSSAI from AMF during the registration process, the corresponding information may be included.
3. NG-RAN-2 may determine whether to accept the S-NSSAI for the PDU session included in the Handover Request message. If NG-RAN-2 cannot accept this, it may determine the remapped S-NSSAI according to the network slice remapping policy. At this time, the remapped S-NSSAI can be determined by referring to the allowed NSSAI and the candidate NSSAI received in step 2 together.
   Note: If a specific PDU session has already been remapped to a remapped S-NSSAI rather than the original S-NSSAI through PDU session establishment, service request, or handover, NG-RAN-1 may deliver remapped S-NSSAI information together with the original S-NSSAI in step 2. NG-RAN-2 may determine whether network slice recovery can be performed with the original S-NSSAI again for the corresponding PDU session. If NG-RAN-2 still cannot provide the original S-NSSAI for the corresponding PDU session, when NG-RAN-2 determines a new network slice remapping, whether the remapped S-NSSAI used by NG-RAN-1 can be continuously used may be determined. If NG-RAN-2 can continue to provide the remapped S-NSSAI used by NG-RAN-1, it is also possible to preferentially select it. This can reduce the process of updating the remapped S-NSSAI used by NG-RAN-1 to another remapped S-NSSAI to be used by NG-RAN-2 in AMF, SMF, or PCF.
4. NG-RAN-2 may respond to NG-RAN-1 through a Handover Request Acknowledge message. At this time, for the PDU session for which network slice remapping has been executed, remapped S-NSSAI information may be included and delivered.

In addition, Mapping of original S-NSSAI to remapped S-NSSAI information may be included in the RRC message to be delivered to the UE through NG-RAN-1. Through the corresponding information, since the original S-NSSAI cannot be used in NG-RAN-2, it is possible to inform the UE that the remapped S-NSSAI should be used instead. Therefore, when the UE tries to create a new PDU session related to the original S-NSSAI later, the PDU Session Establishment Request message may include the Remapped S-NSSAI instead of the original S-NSSAI.

Alternatively, a network slice policy used for network slice remapping may be included in the RRC message. Through the corresponding information, it is possible to inform the UE that the original S-NSSAI cannot be used in NG-RAN-2. If the terminal subsequently wants to create a new PDU session related to the original S-NSSAI, it may select the new S-NSSAI according to the network slice remapping policy and include it in the PDU Session Establishment Request.

Alternatively, when the terminal receives a network slice remapping policy from the network in advance in the process of FIG. 5 or 6a and 6b, only indication that the original S-NSSAI is unavailable in NG-RAN-2 may be included in the RRC message because network slice remapping occurs. If the terminal later wants to create a new PDU session related to the original S-NSSAI, it may select the new S-NSSAI according to the network slice remapping policy and include it in the PDU Session Establishment Request.

Alternatively, information related to network slice remapping may not be included in the RRC message at all.

Note: As in steps 4 and 5, Mapping of original S-NSSAI to remapped S-NSSAI information may be delivered to the terminal through an RRC message, but it is also possible to inform the terminal of the information through a NAS message after step 7.

Alternatively, the URSP rule for the original S-NSSAI and the remapped S-NSSAI may be updated to the UE through steps 13 and 17.

5. NG-RAN-1 may deliver the RRC message received from NG-RAN-2 to the UE.

6. The UE may respond to NG-RAN-2 with an RRC message after configuration for network slice remapping is complete.

7. NG-RAN-2 may send a Path Switch Request message to AMF to inform that the UE has successfully moved to NG-RAN-2. The corresponding message may inform, along with information about the PDU session that was normally handed over without network slice remapping, Remapped S-NSSAI, ID for the PDU session for which network slice remapping occurred according to the Network Slice Remapping Control received during the PDU Session Establishment process, and the reason for network slice remapping (i.e., Slice resource shortage or non-supported slice).

8. After AMF checks list of the PDU session that handover is accepted, which is included in the Path Switch Request message of NG-RAN-2, the AMF may request update of AN Tunnel Info for N3 tunnel information for the corresponding PDU session through the Nsmf_PDUSession_UpdateSMContext Request message.

In addition, each SMF in charge of the PDU session for which network slice remapping has been executed is notified that the network slice for the corresponding PDU session has changed from the original S-NSSAI to the remapped S-NSSAI, and the reason may be delivered together.

9. The SMF may check whether the quota allocated to the S-NSSAI related to the current PDU session exceeds the maximum value through signaling with the NF that manages the network Slice Quota.

If the quota for the corresponding S-NSSAI exceeds the maximum value, steps 10 and 11 may be omitted.

Note: If the NF that manages the network slice quota is PCF, step 9 may be skipped and the network slice quota may be checked through step 10. Alternatively, if the NF managing the network slice quota is an AMF or an NF directly connected to the AMF, the network slice quota may be checked immediately after step 7.

10. If the quota allocated to the remapped S-NSSAI among the PDU sessions for which network slice remapping was executed in step 3 does not exceed the maximum value, the SMF may request to update the SM policy for the corresponding PDU session to the PCF through Npcf_SMPolicyControl_Update. At this time, it is notified to the PCF that remapping has occurred for the corresponding PDU session, and the remapped S-NSSAI may be delivered together.

11. The SMF may prepare data transmission to NG-RAN by requesting UPF to update AN Tunnel Info for N3 tunnel information for NG-RAN-2 received in step 8 using N4 Session Modification procedure.

12. SMF may notify that the content requested by AMF has been successfully processed by utilizing Nsmf_PDUSession_UpdateSMContext Response or other messages.

If the quota for the corresponding S-NSSAI exceeds the maximum value in step 9, AMF may be notified that the context update for the corresponding PDU session has failed, and the reason (i.e., slice quota limit) may be delivered together. In addition, a wait timer value may be set and transmitted together to prevent the NG-RAN from performing remapping or recovery to the corresponding network slice for a certain period of time.

Note: The wait timer value itself may be configured in advance in the NG-RAN, and when a cause value related to the slice quota limit is received from AMF, the corresponding timer may be operated.

13. When the AMF receives a notification request for network slice remapping from the PCF during the registration process, the PCF may be informed that network slice remapping has occurred through Npcf_UEPolicyControl_Update, and remapped S-NSSAI may be delivered together.

Note: PCF in charge of UE policy and PCF in charge of SM policy may be different.

14. AMF may respond to NG-RAN-2 through a Path Switch Request Acknowledge message. If the network slice quota check for the remapped S-NSSAI fails, a cause value and a wait timer value may be transmitted to the NG-RAN.

15. NG-RAN-2 may request a UE context release from NG-RAN-1.

16. If the UE leaves NG-RAN-1 belonging to the existing registration area and hands over to NG-RAN-2 belonging to the new NW area, Mobility Registration Update procedure may be started.

Note: At this time, AMF may determine a new Allowed NSSAI by referring to the remapped S-NSSAI determined by NG-RAN-2 in step 3.

Note: even if a UE moves from an existing registration area and enters NG-RAN-2 belonging to a new NW area and S-NSSAI-1 for a specific PDU session that is supported by NG-RAN-1 is not supported by NG-RAN-2, AMF may include S-NSSAI-1 in the new allowed NSSAI. However, since S-NSSAI-1 is not supported in NG-RAN-2, it may be prevented that a new PDU session establishment request based on S-NSSAI-1 is transmitted by sending a new indication to the terminal is sent to NG-RAN-2.

In addition, even if the terminal does not receive information that the corresponding PDU session has been performed network slice remapping during the handover process, even if S-NSSAI-1 is not included in the new Allowed NSSAI through the corresponding indication from the AMF during the Mobility Registration Update process or Re-mapped S-NSSAI information for the corresponding PDU session, it is possible to inform the terminal not to release the PDU session based on the existing S-NSSAI-1.

17. If a network slice remapping event is received in step 13, the PCF may trigger UE configuration update procedure for updating URSP rule related to the original S-NSSAI and remapped S-NSSAI.

For example, in a situation where the network slice for PDU session #1 for which APP #1 was receiving service was remapped from S-NSSAI-A to S-NSSAI-B, even if App #2 newly want to use the service for Slice B, the URSP rule may be updated so that PDU Session #1 can be used equally. However, if the network slice for PDU session #1 is returned to S-NSSAI-A, App #2 cannot use PDU session #1, so creating a new PDU Session #2 for S-NSSAI-B is required to provide service for slice B.

Alternatively, in a situation where the network slice for PDU session #1 for which APP #1 was receiving service is remapped from S-NSSAI-A to S-NSSAI-B, if App #2 newly wants to use service for Slice B, the URSP rule may be updated to create a new PDU Session #2 for S-NSSAI-B.

### 4. Network slice remapping during NG handover

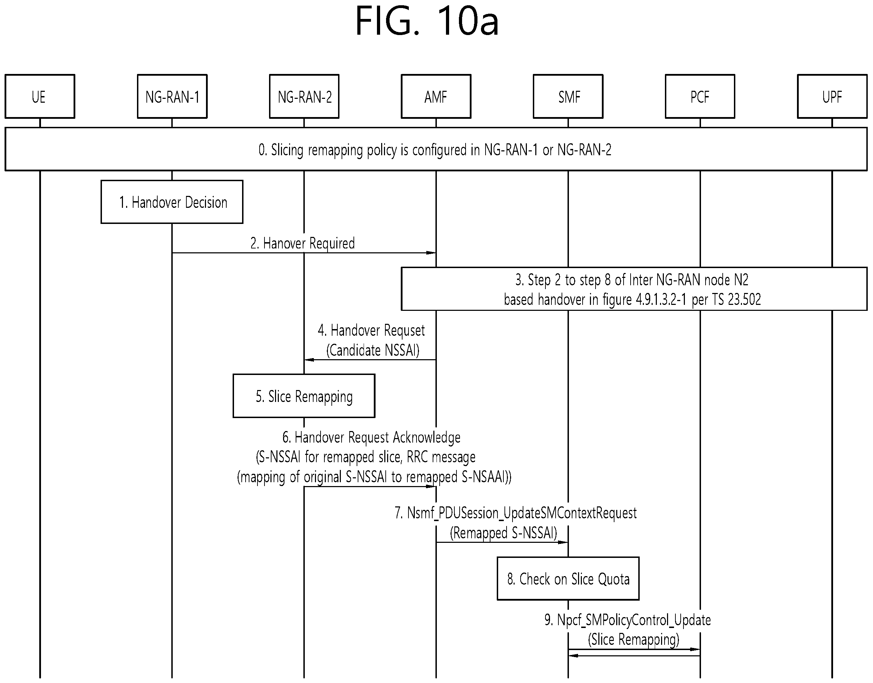

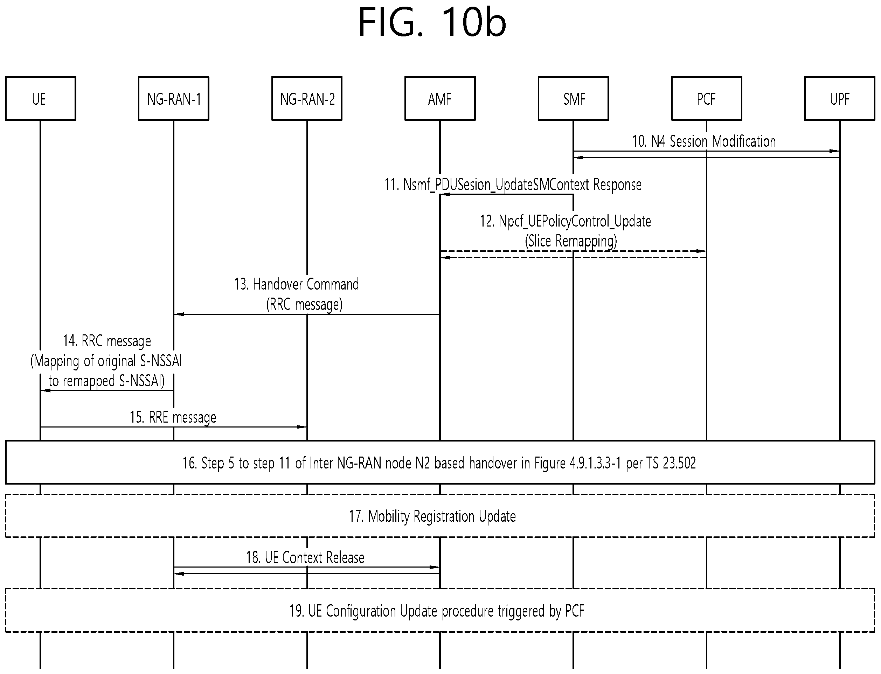

**FIGS. 10a** **and** **10b** **show a first example of network slice remapping during NG handover.**

FIGS. 10a and 10b show a method of remapping a network slice for a specific PDU session by a target NG-RAN in an NG-based handover process.
0. It is assumed that the network slice remapping policy for the terminal is already configured in NG-RAN-1 or NG-RAN-2 through a registration or PDU session establishment procedure.
1. NG-RAN-1 may decide to handover the UE to NG-RAN-2.
2. NG-RAN-1 may transmit a Handover Required message to AMF.
3. Among the NG-based handover procedures in Figure 4.9.1.3.2-1 in TS 23.502 (3GPP TS 23.502 V16.6.0), steps 2 to 8 may be executed. In this process, the SMF managing each PDU session may know that the corresponding PDU session will be handed over to the target NG-RAN (here, NG-RAN-2) and may decide whether to accept it. If this is accepted, a new UL CN Tunnel Info for N3 tunnel for the corresponding PDU session may be allocated through UPF and then transmitted to AMF.
4. AMF may transmit a Handover Request message to NG-RAN-2. The corresponding message may include the information transmitted by the SMF in step 3 and candidate NSSAI information for the terminal.

In addition, when the UE transfers the PDN connection serviced by the EPS to the 5GS, the SMF may add an indication notifying the NG-RAN through the AMF. Upon receiving the corresponding indication, the NG-RAN may know that the corresponding PDU session is being transferred from EPS to 5GS. Therefore, in order to continue to provide service to the UE through the corresponding PDU session, if the original S-NSSAI is not available in the NG-RAN (e.g., slice resource shortage or non-supported slice), network slice remapping for the corresponding PDU session may be performed.

Note: If configured NSSAI is included instead of Candidate NSSAI, NG-RAN may refer to configured NSSAI and List of S-NSSAI(s) supported by AMF when remapping network slices.

5. NG-RAN-2 determines whether it can accept the S-NSSAI for the PDU session included in the Handover Request message, and if it cannot accept it, the remapped S-NSSAI may be determined according to the remapping policy. At this time, the remapped S-NSSAI can be determined by referring to the candidate NSSAI and the allowed NSSAI received in step 4 together.

Note: If a specific PDU session has already been remapped to a remapped S-NSSAI rather than the original S-NSSAI through PDU session establishment, service request, or handover, the AMF may deliver remapped S-NSSAI information together with the original S-NSSAI in step 4. NG-RAN-2 may determine whether network slice recovery can be performed with the original S-NSSAI again for the corresponding PDU session. If NG-RAN-2 still cannot provide the original S-NSSAI for the corresponding PDU session, when NG-RAN-2 determines a new network slice remapping, whether the remapped S-NSSAI used by NG-RAN-1 can be continuously used may be determined. If NG-RAN-2 can continue to provide the remapped S-NSSAI used by NG-RAN-1, it is also possible to preferentially select it. This can reduce the process of updating the remapped S-NSSAI used by NG-RAN-1 to another remapped S-NSSAI to be used by NG-RAN-2 in AMF, SMF, or PCF.

6. NG-RAN-2 may respond to AMF through a Handover Request Acknowledge message. At this time, for the PDU session for which network slice remapping has been executed, remapped S-NSSAI information and the reason (Slice resource shortage or non-supported slice) may be included together and delivered.

In addition, Mapping of original S-NSSAI to remapped S-NSSAI information may be included in the RRC message to be delivered to the UE through NG-RAN-1. Through the corresponding information, since the original S-NSSAI cannot be used in NG-RAN-2, it is possible to inform the UE that the remapped S-NSSAI should be used instead. Therefore, when the UE tries to create a new PDU session related to the original S-NSSAI later, the PDU Session Establishment Request message may include the Remapped S-NSSAI instead of the original S-NSSAI.

Alternatively, a network slice policy used for network slice remapping may be included in the RRC message. Through the corresponding information, it is possible to inform the UE that the original S-NSSAI cannot be used in NG-RAN-2. If the terminal subsequently wants to create a new PDU session related to the original S-NSSAI, it may select the new S-NSSAI according to the network slice remapping policy and include it in the PDU Session Establishment Request.

Alternatively, when the terminal receives a network slice remapping policy from the network in advance in the process of FIG. 5 or 6a and 6b, only indication that the original S-NSSAI is unavailable in NG-RAN-2 may be included in the RRC message because network slice remapping occurs. If the terminal later wants to create a new PDU session related to the original S-NSSAI, it may select the new S-NSSAI according to the network slice remapping policy and include it in the PDU Session Establishment Request.

Alternatively, information related to network slice remapping may not be included in the RRC message.

Note: Instead of delivering Mapping of original S-NSSAI to remapped S-NSSAI information to the terminal through an RRC message as in steps 6 and 14, it is also possible to inform the terminal of the corresponding information through a NAS message after step 7.

Alternatively, the URSP rule for the original S-NSSAI and the remapped S-NSSAI may be updated to the UE through steps 12 and 19.

7. After AMF checks list of the PDU session that handover is accepted, which is included in the Handover Request Acknowledge of NG-RAN-2, the AMF may request update of AN Tunnel Info for N3 tunnel information for the corresponding PDU session through the Nsmf_PDUSession_UpdateSMContext Request message.

In addition, each SMF in charge of the PDU session for which network slice remapping has been executed is notified that the network slice for the corresponding PDU session has changed from the original S-NSSAI to the remapped S-NSSAI, and the reason may be delivered together.

8. The SMF may check whether the quota allocated to the S-NSSAI related to the current PDU session exceeds the maximum value through signaling with the NF that manages the network Slice Quota.

If the quota for the corresponding S-NSSAI exceeds the maximum value, steps 9 and 10 may be omitted.

Note: If the NF that manages the network slice quota is PCF, step 8 may be skipped and the network slice quota may be checked through step 9. Alternatively, if the NF managing the network slice quota is an AMF or an NF directly connected to the AMF, the network slice quota may be checked immediately after step 6.

9. If the quota allocated to the remapped S-NSSAI among the PDU sessions for which network slice remapping was executed in step 5 does not exceed the maximum value, the SMF may request to update the SM policy for the corresponding PDU session to the PCF through Npcf_SMPolicyControl_Update. At this time, it is notified to the PCF that remapping has occurred for the corresponding PDU session, and the remapped S-NSSAI may be delivered together.

10. The SMF may prepare data transmission to NG-RAN by requesting UPF to update AN Tunnel Info for N3 tunnel information for NG-RAN-2 received in step 8 using N4 Session Modification procedure.

11. SMF may notify that the content requested by AMF has been successfully processed by utilizing Nsmf_PDUSession_UpdateSMContext Response or other messages.

If the quota for remapped S-NSSAI exceeds the maximum value in step 8, AMF may be notified that the context update for the corresponding PDU session has failed, and the reason (i.e., slice quota limit) may be delivered together. In addition, a wait timer value may be set and transmitted together to prevent the NG-RAN from performing remapping or recovery to the corresponding network slice for a certain period of time.

Note: The wait timer value itself may be configured in advance in the NG-RAN, and when a cause value related to the slice quota limit is received from AMF, the corresponding timer may be operated.

12. When the AMF receives a notification request for network slice remapping from the PCF during the registration process, the PCF may be informed that network slice remapping has occurred through Npcf_UEPolicyControl_Update, and remapped S-NSSAI may be delivered together.

Note: PCF in charge of UE policy and PCF in charge of SM policy may be different.

13. AMF may transmit a handover command message to NG-RAN-1 based on the information received in steps 6 and 11. At this time, the RRC message generated by NG-RAN-2 may also be transmitted.

If the network slice quota check for the remapped S-NSSAI fails, a cause value and a wait timer value may be transmitted to the NG-RAN using a separate NGAP message.

14. NG-RAN-1 may deliver the RRC message received from NG-RAN-2 to the UE.

15. After the configuration for network slice remapping is completed, the UE may respond to the NG-RAN-2 with an RRC message.

16. Steps 5 to 11 of the NG-based handover procedure of Figure 4.9.1.3.3-1 in TS 23.502 (3GPP TS 23.502 V16.6.0) may be executed.

17. If the UE leaves NG-RAN-1 belonging to the existing registration area and hands over to NG-RAN-2 belonging to the new NW area, Mobility Registration Update procedure may be started.

Note: At this time, AMF may determine a new Allowed NSSAI by referring to the remapped S-NSSAI determined by NG-RAN-2 in step 5.

Note: even if a UE moves from an existing registration area and enters NG-RAN-2 belonging to a new NW area and S-NSSAI-1 for a specific PDU session that is supported by NG-RAN-1 is not supported by NG-RAN-2, AMF may include S-NSSAI-1 in the new allowed NSSAI. However, since S-NSSAI-1 is not supported in NG-RAN-2, it may be prevented that a new PDU session establishment request based on S-NSSAI-1 is transmitted by sending a new indication to the terminal is sent to NG-RAN-2.

In addition, even if the terminal does not receive information that the corresponding PDU session has been performed network slice remapping during the handover process, even if S-NSSAI-1 is not included in the new Allowed NSSAI through the corresponding indication from the AMF during the Mobility Registration Update process or Re-mapped S-NSSAI information for the corresponding PDU session, it is possible to inform the terminal not to release the PDU session based on the existing S-NSSAI-1.

18. AMF may request a UE context release from NG-RAN-1.

19. If a network slice remapping event is received in step 12, the PCF may trigger UE configuration update procedure for updating URSP rule related to the original S-NSSAI and remapped S-NSSAI.

For example, in a situation where the network slice for PDU session #1 for which APP #1 was receiving service was remapped from S-NSSAI-A to S-NSSAI-B, even if App #2 newly want to use the service for Slice B, the URSP rule may be updated so that PDU Session #1 can be used equally. However, if the network slice for PDU session #1 is returned to S-NSSAI-A, App #2 cannot use PDU session #1, so creating a new PDU Session #2 for S-NSSAI-B is required to provide service for slice B.

Alternatively, in a situation where the network slice for PDU session #1 for which APP #1 was receiving service is remapped from S-NSSAI-A to S-NSSAI-B, if App #2 newly wants to use service for Slice B, the URSP rule may be updated to create a new PDU Session #2 for S-NSSAI-B.

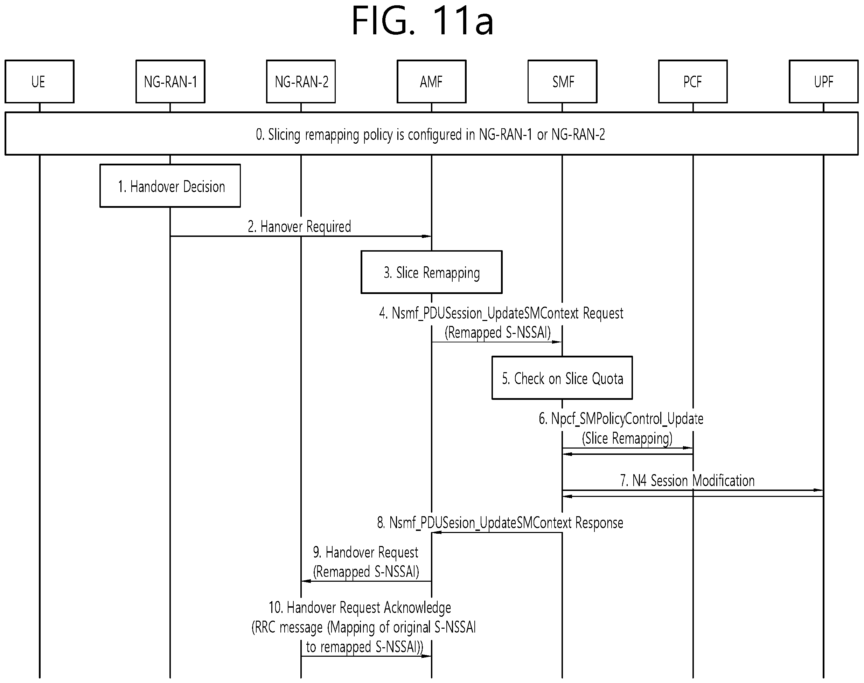

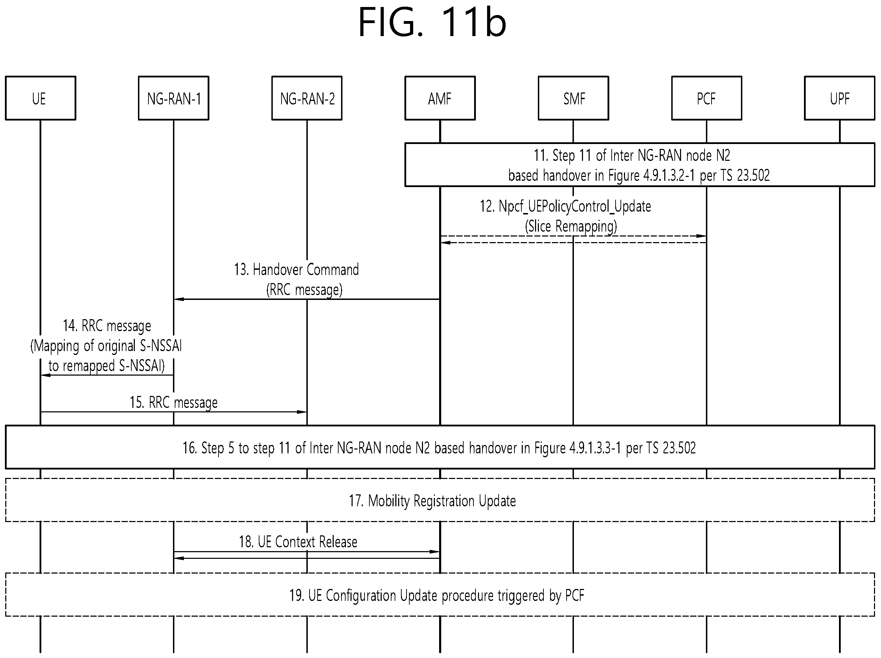

**FIGS. 11a** **and** **11b** **show a second example of network slice remapping during NG handover.**

FIGS. 11a and 11b show a method in which AMF remaps a network slice for a specific PDU session in an NG-based handover process.
0. It is assumed that the network slice remapping policy for the terminal is already configured in NG-RAN-1 or NG-RAN-2 through a registration or PDU session establishment procedure.
1. NG-RAN-1 may decide to handover the UE to NG-RAN-2.
2. NG-RAN-1 may transmit a Handover Required message to AMF.
3. AMF may determine whether NG-RAN-2 can accept the S-NSSAI for the PDU session included in the Handover Required message. If it is determined that this cannot be accepted, the AMF may determine a remapped S-NSSAI based on a remapping policy, candidate NSSAI, and the like.
   Note: If a specific PDU session has already been remapped to a remapped S-NSSAI rather than the original S-NSSAI through PDU session establishment, service request, or handover, the AMF may determine whether network slice recovery may be performed with the original S-NSSAI again for the corresponding PDU session. If NG-RAN-2 still cannot provide the original S-NSSAI for the corresponding PDU session, when AMF decides to remap a new network slice, whether the remapped S-NSSAI used by NG-RAN-1 can be continuously used may be determined. If NG-RAN-2 can continue to provide the remapped S-NSSAI used by NG-RAN-1, it is also possible for the AMF to preferentially select it. This can reduce the process of updating the remapped S-NSSAI used by NG-RAN-1 to another remapped S-NSSAI to be used by NG-RAN-2 in AMF, SMF, or PCF.
4. After the AMF determines the list of PDU sessions to be handed over to NG-RAN-2, the AMF may inform that the PDU sessions are handed over to the target NG-RAN (here, NG-RAN-2) through the Nsmf_PDUSession_UpdateSMContext Request message to each SMF in charge of it.

In addition, the reason for remapping the network slice and the value of the remapped S-NSSAI may be additionally transmitted to the SMF managing the PDU session remapped from the original S-NSSAI to the remapped S-NSSAI through step 3.

5. the SMF may check whether the quota allocated to the S-NSSAI related with the current PDU session exceeds the maximum value through signaling with the NF that manages the network slice quota.If the quota for that S-NSSAI does not exceed the maximum value, the SMF may decide whether to accept handover for each PDU session.

If the quota for the corresponding S-NSSAI exceeds the maximum value, steps 6 and 7 may be omitted.

Note: If the NF that manages the network slice quota is PCF, step 5 may be skipped and the network slice quota may be checked through step 6. Alternatively, if the NF managing the network slice quota is an AMF or an NF directly connected to the AMF, the network slice quota may be checked immediately after step 3.

6. Among the network slice remapped PDU sessions in step 3, if the quota allocated to the remapped S-NSSAI does not exceed the maximum value, the SMF may request an SM policy update for the corresponding PDU session from the PCF through Npcf_SMPolicyControl_Update. At this time, it is notified to the PCF that remapping has occurred for the corresponding PDU session, and the remapped S-NSSAI may be delivered together.

7. If the SMF decides to accept handover to NG-RAN-2 for each PDU session, a new UL CN Tunnel Info for N3 tunnel for the corresponding PDU session may be allocated to the UPF.

8. The SMF transmits information about the PDU session accepting handover to the target NG-RAN (here, NG-RAN-2) (e.g., PDU session ID, new UL CN Tunnel Info for N3 tunnel, etc.) and An Nsmf_PDUSession_UpdateSMContext Response message including information on the PDU session for which handover was rejected (e.g., PDU session ID, reason for rejection, etc.) to AMF. In the case of a PDU session with network slice remapping in step 3, the reason for network slice remapping and the remapped S-NSSAI value may be delivered together.

If the quota for the corresponding S-NSSAI exceeds the maximum value in step 5, AMF may be notified that the context update for the corresponding PDU session has failed, and the reason (i.e., slice quota limit) may be delivered together. In addition, a wait timer value may be set and transmitted together to prevent the AMF from performing remapping or recovery to the corresponding network slice for a certain period of time.

In addition, when the UE transfers the PDN connection serviced by the EPS to the 5GS, the SMF may add an indication notifying the NG-RAN through the AMF. Upon receiving the corresponding indication, the NG-RAN may know that the corresponding PDU session is being transferred from EPS to 5GS. Therefore, in order to continue to provide service to the UE through the corresponding PDU session, if the original S-NSSAI is not available in the NG-RAN (e.g., slice resource shortage or non-supported slice), network slice remapping for the corresponding PDU session may be performed.

9. AMF may transmit a Handover Request message to NG-RAN-2. The corresponding message may include information transmitted from NG-RAN-1 to AMF in step 2 and information transmitted from SMF to AMF in step 8.

10. NG-RAN-2 may respond to AMF through a Handover Request Acknowledge message.

In addition, Mapping of original S-NSSAI to remapped S-NSSAI information may be included in the RRC message to be delivered to the UE through NG-RAN-1. Through the corresponding information, since the original S-NSSAI cannot be used in NG-RAN-2, it is possible to inform the UE that the remapped S-NSSAI should be used instead. Therefore, when the UE tries to create a new PDU session related to the original S-NSSAI later, the PDU Session Establishment Request message may include the Remapped S-NSSAI instead of the original S-NSSAI.

Alternatively, a network slice policy used for network slice remapping may be included in the RRC message. Through the corresponding information, it is possible to inform the UE that the original S-NSSAI cannot be used in NG-RAN-2. If the terminal subsequently wants to create a new PDU session related to the original S-NSSAI, it may select the new S-NSSAI according to the network slice remapping policy and include it in the PDU Session Establishment Request.

Alternatively, when the terminal receives a network slice remapping policy from the network in advance in the process of FIG. 5 or 6a and 6b, only indication that the original S-NSSAI is unavailable in NG-RAN-2 may be included in the RRC message because network slice remapping occurs. If the terminal later wants to create a new PDU session related to the original S-NSSAI, it may select the new S-NSSAI according to the network slice remapping policy and include it in the PDU Session Establishment Request.

Alternatively, information related to network slice remapping may not be included in the RRC message at all.

Note: Instead of delivering Mapping of original S-NSSAI to remapped S-NSSAI information to the terminal through an RRC message as in steps 10 and 14, it is also possible to inform the terminal of the corresponding information through a NAS message after step 10.

Alternatively, the URSP rule for the original S-NSSAI and the remapped S-NSSAI may be updated to the UE through steps 12 and 19.

11. Step 11 of the NG-based handover procedure of Figure 4.9.1.3.2-1 in TS 23.502 (3GPP TS 23.502 V16.6.0) may be executed.

12. When the AMF receives a notification request for network slice remapping from the PCF during the registration process, the AMF may notify the PCF that network slice remapping has occurred through Npcf_UEPolicyControl_Update, and transmit the remapped S-NSSAI together.

NOTE: A PCF in charge of UE policy and a PCF in charge of SM policy may be different.

13. AMF may transmit a handover command message to NG-RAN-1 based on the information received in steps 8 and 11. At this time, the RRC message generated by NG-RAN-2 may also be transmitted.

14. NG-RAN-1 may deliver the RRC message received from NG-RAN-2 to the UE.

15. After the configuration for network slice remapping is completed, the UE may respond to the NG-RAN-2 with an RRC message.

16. Among the NG-based handover procedures in Figure 4.9.1.3.3-1 in TS 23.502 (3GPP TS 23.502 V16.6.0), steps 5 to 11 may be executed.

17. If the UE leaves NG-RAN-1 belonging to the existing registration area and hands over to NG-RAN-2 belonging to the new NW area, Mobility Registration Update procedure may be started.

Note: At this time, AMF may determine a new Allowed NSSAI by referring to the remapped S-NSSAI determined by NG-RAN-2 in step 5.

Note: even if a UE moves from an existing registration area and enters NG-RAN-2 belonging to a new NW area and S-NSSAI-1 for a specific PDU session that is supported by NG-RAN-1 is not supported by NG-RAN-2, AMF may include S-NSSAI-1 in the new allowed NSSAI. However, since S-NSSAI-1 is not supported in NG-RAN-2, it may be prevented that a new PDU session establishment request based on S-NSSAI-1 is transmitted by sending a new indication to the terminal is sent to NG-RAN-2.

In addition, even if the terminal does not receive information that the corresponding PDU session has been performed network slice remapping during the handover process, even if S-NSSAI-1 is not included in the new Allowed NSSAI through the corresponding indication from the AMF during the Mobility Registration Update process or Re-mapped S-NSSAI information for the corresponding PDU session, it is possible to inform the terminal not to release the PDU session based on the existing S-NSSAI-1.

18. AMF may request a UE context release from NG-RAN-1.

19. If a network slice remapping event is received in step 12, the PCF may trigger UE configuration update procedure for updating URSP rule related to the original S-NSSAI and remapped S-NSSAI.

Note: For example, in a situation where the network slice for PDU session #1 for which APP #1 was receiving service was remapped from S-NSSAI-A to S-NSSAI-B, even if App #2 newly want to use the service for Slice B, the URSP rule may be updated so that PDU Session #1 can be used equally. However, if the network slice for PDU session #1 is returned to S-NSSAI-A, App #2 cannot use PDU session #1, so creating a new PDU Session #2 for S-NSSAI-B is required to provide service for slice B.

Alternatively, in a situation where the network slice for PDU session #1 for which APP #1 was receiving service is remapped from S-NSSAI-A to S-NSSAI-B, if App #2 newly wants to use service for Slice B, the URSP rule may be updated to create a new PDU Session #2 for S-NSSAI-B.

FIGS. 10a, 10b and 11a and 11b deal with the process of changing the original S-NSSAI to the remapped S-NSSAI, but the same procedure may be applied to the situation of changing from the remapped S-NSSAI to the original S-NSSAI.

### 5. Network slice recovery

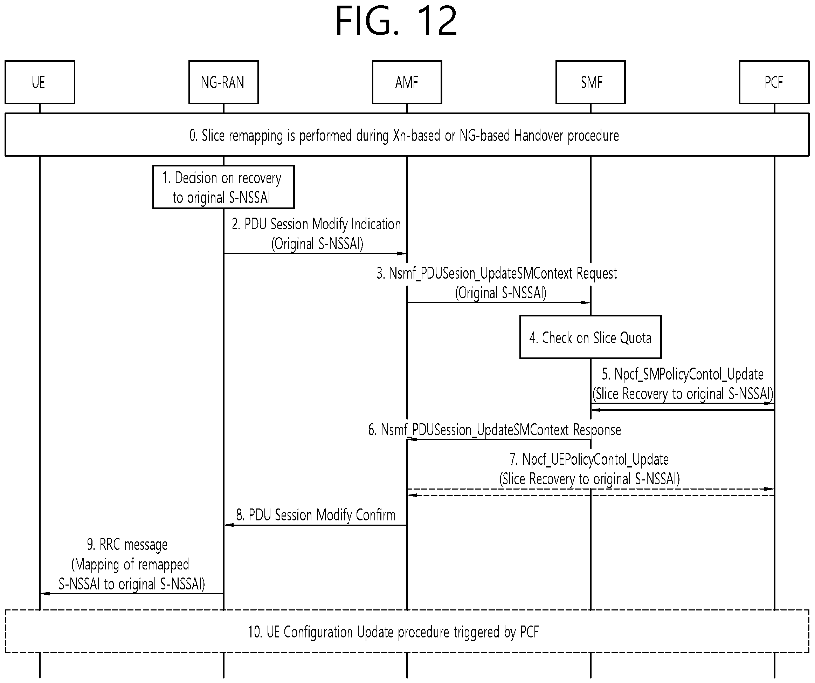

**FIG. 12** **shows an example of network slice recovery.**

FIG. 12 shows PDU sessions that were remapped to the remapped S-NSSAI back to the original S-NSSAI when the NG-RAN can provide service again for the original S-NSSAI, which was unavailable due to network slice resource shortage. A method for network slice recovery with NSSAI may be presented.
0. It is assumed that network slice remapping has occurred in the handover process according to FIGS. 9a and 9b, 10c and 11b, and 11a and 11b. In addition, it is assumed that network slice remapping control information for the UE is configured in the NG-RAN through a PDU Session Establishment procedure.
1. When network slice resources are secured for the original S-NSSAI, which was unavailable due to network slice resource shortage, and service can be provided again through the original S-NSSAI, NG -RAN may decide to perform network slice recovery of the related PDU sessions back to the original S-NSSAI. If the resources for the original S-NSSAI are insufficient to recover all PDU sessions back to the original S-NSSAI, slice recovery for a specific PDU session may be preferentially permitted by referring to network slice remapping control information (ARP or priority for the individual PDU session) received in PDU session establishment process.
2. The NG-RAN may notify the AMF that the corresponding PDU session has been recovered to the original S-NSSAI through a PDU Session Modify Indication message.
3. The AMF may check the original S-NSSAI and the list of PDU sessions where network slice recovery has occurred, which are included in the PDU Session Modify Indication message by the NG-RAN, and notify, to each SMF, that the network slice for the corresponding PDU session has changed from the remapped S-NSSAI to the original S-NSSAI through an Nsmf_PDUSession_UpdateSMContext Request message
4. The SMF may check whether the quota allocated to the original S-NSSAI related to the current PDU session exceeds the maximum value through signaling with the NF that manages the network Slice Quota.

If the quota for the original S-NSSAI exceeds the maximum value, step 5 may be omitted.

Note: If the NF that manages the network slice quota is PCF, step 4 may be skipped and the network slice quota may be checked through step 5. Alternatively, if the NF managing the network slice quota is an AMF or an NF directly connected to the AMF, the network slice quota may be checked immediately after step 2.

5. If the quota for the original S-NSSAI does not exceed the maximum value, the SMF may request the PCF to update the SM policy for the corresponding PDU session through Npcf_SMPolicyControl_Update. At this time, it is notified to the PCF that recovery for the corresponding PDU session has occurred, and the original S-NSSAI may be delivered together.

6. SMF may notify that the content requested by AMF has been successfully processed by utilizing Nsmf_PDUSession_UpdateSMContext Response or other messages.

If the quota for the remapped S-NSSAI exceeds the maximum value in step 4, AMF may be notified that the context update for the corresponding PDU session has failed, and the reason (i.e., slice quota limit) may be delivered together. In addition, a wait timer value may be set and transmitted together to prevent the NG-RAN from performing remapping or recovery to the corresponding network slice for a certain period of time.

Note: The wait timer value itself may be configured in advance in the NG-RAN, and when a cause value related to the slice quota limit is received from AMF, the corresponding timer may be operated.

7. When the AMF receives a notification request for network slice remapping from the PCF during the registration process, the PCF may be informed that network slice remapping has occurred through Npcf_UEPolicyControl_Update, and remapped S-NSSAI may be delivered together.

Note: PCF in charge of UE policy and PCF in charge of SM policy may be different.

8. AMF may respond to NG-RAN through a PDU Session Modify Confirm message. If the network slice quota check for the remapped S-NSSAI fails, a cause value and a wait timer value may be transmitted to the NG-RAN.

9. The NG-RAN may deliver Slice recovery to original S-NSSAI information to the UE through an RRC message. Through the corresponding information, it is possible to inform the UE that the original S-NSSAI can be used again in the NG-RAN.

Based on the received RRC message, the terminal may include the original S-NSSAI as it is in the PDU Session Establishment Request message when attempting to create a new PDU session related to the original S-NSSAI later.

Alternatively, information related to network slice remapping may not be included in the RRC message at all.

Note: Instead of delivering slice recovery to original S-NSSAI information to the terminal through an RRC message as in step 9, it is also possible to inform the terminal of the corresponding information through a NAS message after step 7.

Alternatively, the URSP rule for the original S-NSSAI and the remapped S-NSSAI may be updated to the UE through steps 7 and 10.

10. If a slice remapping recovery event is received in step 7, the PCF may trigger UE configuration update procedure for updating URSP rule related to the original S-NSSAI and remapped S-NSSAI.

For example, in a situation where the network slice for PDU session #1 for which APP #1 was receiving service was remapped from S-NSSAI-A to S-NSSAI-B, even if App #2 newly want to use the service for Slice B, the URSP rule may be updated so that PDU Session #1 can be used equally. However, if the network slice for PDU session #1 is returned to S-NSSAI-A, App #2 cannot use PDU session #1, so creating a new PDU Session #2 for S-NSSAI-B is required to provide service for slice B.

Alternatively, in a situation where the network slice for PDU session #1 for which APP #1 was receiving service is remapped from S-NSSAI-A to S-NSSAI-B, if App #2 newly wants to use service for Slice B, the URSP rule may be updated to create a new PDU Session #2 for S-NSSAI-B.

### 6. Network slice remapping during service request

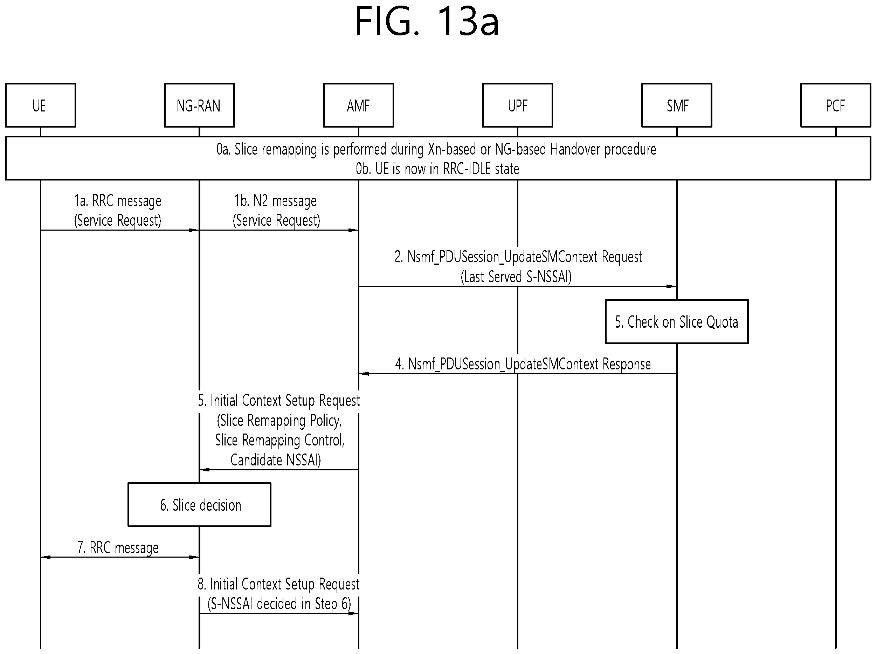

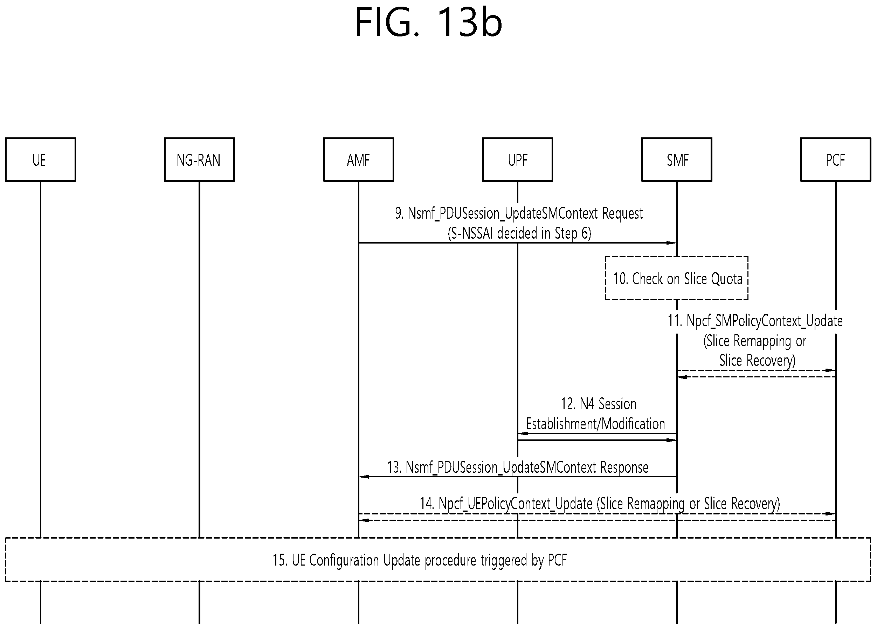

**FIGS. 13a** **and** **13b** **show examples of network slice remapping during a service request.**

FIGS. 13a and 13b show a method in which the NG-RAN performs network slice remapping during a state transition of the UE from RRC-IDLE to RRC-CONNECTED.
0. It is assumed that the terminal transitions to the RRC-IDLE state after network slice remapping occurs in the handover process according to FIGS. 9a and 9b, 10a and 10b, and 11a and 11b.
1. The RRC-IDLE terminal may determine transition to the RRC-CONNECTED state in order to receive service from the corresponding network, and transmit a service request message to the network through RRC and N2 messages. The terminal may notify a list of PDU sessions to be re-activated by including List Of PDU Sessions To Be Activated information in a service request message.
2. Based on the List Of PDU Sessions To Be Activated information, the AMF may request UP activation for the corresponding PDU session by sending an Nsmf_PDUSession_UpdateSMContext Request to the SMF in charge of each PDU session. At this time, the AMF may include the S-NSSAI value (i.e., Last served S-NSSAI) used for the corresponding PDU session in the previous RRC-CONNECTED state and transmit. For example, when network slice remapping is executed for the corresponding PDU session in NG-RAN, the remapped S-NSSAI may be included in the Last served S-NSSAI and transmitted. For a PDU session in which network slice remapping has not occurred, the original S-NSSAI may be included in the Last served S-NSSAI and transmitted.
3. The SMF may check whether the quota allocated to the S-NSSAI related to the current PDU session exceeds the maximum value through signaling with the NF that manages the network Slice Quota.
   Note: If the NF managing the network slice quota is AMF or an NF directly connected to AMF, the network slice quota may be checked immediately after step 1.
4. SMF uses the Nsmf_PDUSession_UpdateSMContext Response message to notify that the content requested by AMF has been successfully processed. In addition, network slice remapping control information for the terminal may be transmitted together while requesting resource allocation in the NG-RAN for the corresponding PDU session to the AMF. In addition, when a network slice remapping policy is allocated for each PDU session to the UE, corresponding information may also be included.

If the quota for S-NSSAI associated with the corresponding PDU session exceeds the maximum value in step 3, AMF may be notified that the context update for the corresponding PDU session has failed, and the reason (i.e., slice quota limit) may be delivered together. In addition, a wait timer value may be set and transmitted together to prevent the NG-RAN from performing remapping or recovery to the corresponding network slice for a certain period of time.

Note: The wait timer value itself may be configured in advance in the NG-RAN, and when a cause value related to the slice quota limit is received from AMF, the corresponding timer may be operated.

Note: If the SMF needs to update the CN Tunnel Info of UPF information for the N3 tunnel, it may perform N4 Session Modification procedure with the UPF before step 4.

5. AMF may deliver an Initial Context Setup Request message to NG-RAN. Through the corresponding message, it is possible to request the NG-RAN to create a UE context, and deliver the PDU session resource allocation request received from the SMF in step 4.

The message may also include a network slice remapping policy to be delivered to the NG-RAN, network slice remapping control, and Candidate NSSAI. In addition, a service accept message to be delivered to the terminal may be included. The Service Accept message may include a re-activation PDU session list.

6. The NG-RAN may create a UE context based on the information received in step 5, allocate resources for the corresponding PDU session according to the SMF request, and then determine a network slice for the corresponding PDU session.

7. NG-RAN may deliver the Service Accept message received from AMF in step 5 to the UE. If, in step 6, the NG-RAN selects a value different from the S-NSSAI (i.e., Last served S-NSSAI) used for the corresponding PDU session in the previous RRC-CONNECTED state, NG-RAN may transmit to the UE to inform the fact through an RRC message.

For example, in the case of network slice recovery, slice recovery to original S-NSSAI information may be delivered to the UE through an RRC message to inform the UE that the original S-NSSAI can be used again in the NG-RAN.

If network slice remapping has occurred, Mapping of original S-NSSAI to remapped S-NSSAI information may be delivered to indicate that the original S-NSSAI cannot be used in NG-RAN, so remapped S-NSSAI must be used instead.

Alternatively, a network slice remapping policy used for network slice remapping may be included in the RRC message. Through the corresponding information, it is possible to inform the UE that the original S-NSSAI cannot be used in NG-RAN-2. If the UE subsequently wants to create a new PDU session related to the original S-NSSAI, it may select the new S-NSSAI according to the network slice remapping policy and include it in the PDU Session Establishment Request.

Alternatively, when the terminal receives a network slice remapping policy from the network in advance in the process described in FIG. 5 or FIGS. 6a and 6b, only indication that NSSAI is unavailable in NG-RAN-2 because network slice remapping occurs may be included. If the terminal later wants to create a new PDU session related to the original S-NSSAI, it may select the new S-NSSAI according to the network slice remapping policy and include it in the PDU Session Establishment Request.

Therefore, based on the received RRC message, the terminal may determine what S-NSSAI value to include in the PDU Session Establishment Request message when trying to create a new PDU session related to the original S-NSSAI later.

Alternatively, information related to network slice remapping may not be included in the RRC message at all.

Note: Instead of delivering network slice recovery or network slice remapping information to the terminal through an RRC message as in step 7, it is also possible to inform the terminal of the corresponding information through a NAS message after step 14.

Alternatively, the URSP rules for the original S-NSSAI and the remapped S-NSSAI may be updated to the UE through steps 14 and 15 to suit the situation of network slice recovery or network slice remapping.

8. After creating a UE context and completing resource allocation for the PDU session, the NG-RAN may respond to the AMF with an Initial Context Setup Response message.

If the NG-RAN selects a value different from the Last served S-NSSAI in step 6, it can be transmitted including the contents thereof. That is, whether it is a Mapping of original S-NSSAI to remapped S-NSSAI situation or a slice recovery to original S-NSSAI situation is also notified. In the case of Mapping of original S-NSSAI to remapped S-NSSAI, the reason (Slice resource shortage or non-supported slice) may be informed together.

9. After AMF checks the list of PDU sessions included in the Initial Context Setup Response message by NG-RAN, its S-NSSAI, and its reason, it may request to update context for the corresponding PDU to each SMF through an Nsmf_PDUSession_UpdateSMContext Request message. If the NG-RAN selects a value different from the Last served S-NSSAI in step 6, it may transmit including the contents thereof.

10. If the NG-RAN selects a different value from the Last served S-NSSAI in step 6, the SMF may check that quota allocated for the S-NSSAI related to the current PDU session has exceeded the maximum value through signaling with the NF that manages the network slice quota.

If the quota for the corresponding S-NSSAI exceeds the maximum value, steps 11 and 12 may be omitted.

Alternatively, if the NG-RAN decides to use Last served S-NSSAI as it is in step 6, steps 10 and 11 may be omitted.

Note: If the NF that manages the network slice quota is PCF, step 10 may be skipped and the network slice quota may be checked through step 11. Alternatively, if the NF managing the network slice quota is an AMF or an NF directly connected to the AMF, the network slice quota may be checked immediately after step 8.

11. If the quota does not exceed the maximum value in step 10, the SMF may request an SM policy update for the corresponding PDU session to the PCF through Npcf_SMPolicyControl_Update. At this time, it is notified to the PCF that network slice recovery or network slice remapping for the corresponding PDU session has occurred, and the S-NSSAI selected in step 6 may be delivered together.

12. The SMF may transmit the AN Tunnel Info for N3 tunnel information received in step 9 to the UPF using the N4 Session Establishment or N4 Session Modification procedure to establish a data transmission tunnel to the NG-RAN.

13. The SMF may utilize Nsmf_PDUSession_UpdateSMContext Response or other messages to inform that the content requested by the AMF has been successfully processed.

If the quota exceeds the maximum value in step 10, AMF may be notified that the context update for the corresponding PDU session has failed, and the reason (i.e., slice quota limit) may be delivered together. In addition, a wait timer value may be set and transmitted together to prevent the NG-RAN from performing remapping or recovery to the corresponding network slice for a certain period of time.

Note: The wait timer value itself may be configured in advance in the NG-RAN, and when a cause value related to the slice quota limit is received from AMF, the corresponding timer may be operated.

14. When the AMF receives a notification request for network slice remapping from the PCF during the registration process, the PCF may be informed that network slice remapping or network slice recovery has occurred through Npcf_UEPolicyControl_Update, and the S-NSSAI selected in step 6 may be delivered together.

Note: PCF in charge of UE policy and PCF in charge of SM policy may be different.

15. If a network slice recovery or network slice remapping situation is received in step 14, the PCF may trigger UE configuration update procedure for updating URSP rule related to the original S-NSSAI and remapped S-NSSAI.

For example, in a situation where the network slice for PDU session #1 for which APP #1 was receiving service was remapped from S-NSSAI-A to S-NSSAI-B, even if App #2 newly want to use the service for Slice B, the URSP rule may be updated so that PDU Session #1 can be used equally. However, if the network slice for PDU session #1 is returned to S-NSSAI-A, App #2 cannot use PDU session #1, so creating a new PDU Session #2 for S-NSSAI-B is required to provide service for slice B.

Alternatively, in a situation where the network slice for PDU session #1 for which APP #1 was receiving service is remapped from S-NSSAI-A to S-NSSAI-B, if App #2 newly wants to use service for Slice B, the URSP rule may be updated to create a new PDU Session #2 for S-NSSAI-B.

### 7. Network slice remapping capability exchange during Xn and NG configuration

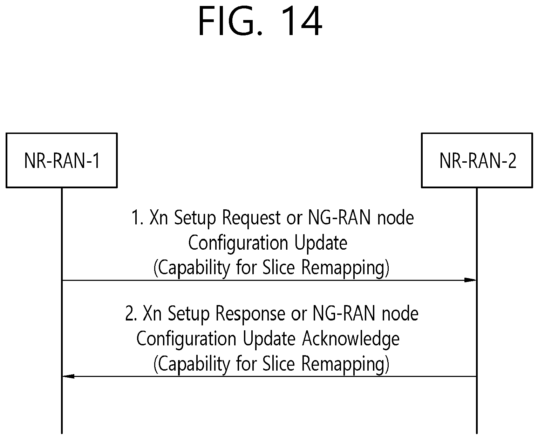

**FIG. 14** **shows a first example of exchanging network slice remapping capability during Xn and NG configuration update.**

FIG. 14 illustrates a method of exchanging network slice capability (Slice Remapping Capability) between NG-RANs through an Xn setup or configuration update procedure.
1. NG-RAN-1 may transmit the network slice remapping capability of the corresponding node to NG-RAN-2 through an Xn Setup Request or NG-RAN Node Configuration Update message.
2. NG-RAN-2 may inform NG-RAN-1 of the network slice remapping capability of the corresponding node through an Xn Setup Response or NG-RAN node Configuration Update Acknowledge message.

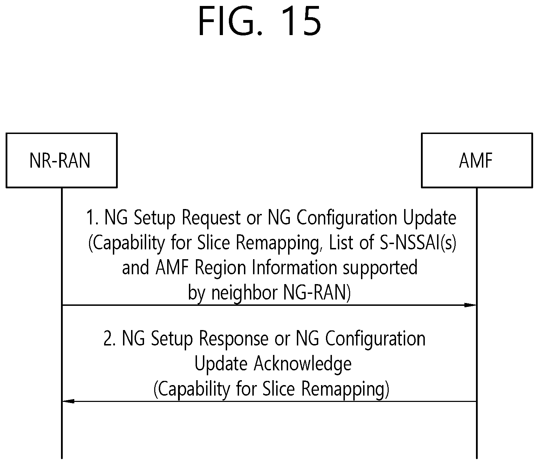

**FIG. 15** **shows a second example of exchanging network slice remapping capability during Xn and NG configuration updates.**

FIG. 15 shows a method of exchanging network slice remapping capability between NG-RAN and AMF through an NG setup or configuration update procedure. In addition, a method for the NG-RAN to deliver the S-NSSAI list supported by the neighboring NG-RAN to the AMF may also be included.
1. The NG-RAN may transmit the network slice remapping capability of the corresponding node to the AMF through an NG Setup Request or NG Configuration Update message.
   In addition, the S-NSSAI list supported by other NG-RANs located around the NG-RAN may be delivered to the AMF along with AMF region information. The AMF may use the corresponding information to determine the allowed NSSAI so that the allowed NSSAI can be guaranteed even in the NG-RAN located around the registration area of the terminal during the subsequent registration process of the terminal.
2. The AMF may transmit the network slice remapping capability of the corresponding node to the NG-RAN through an NG Setup Response or NG Configuration Update Acknowledge message.

### 8. Data forwarding for unsupported network slices during Xn handover

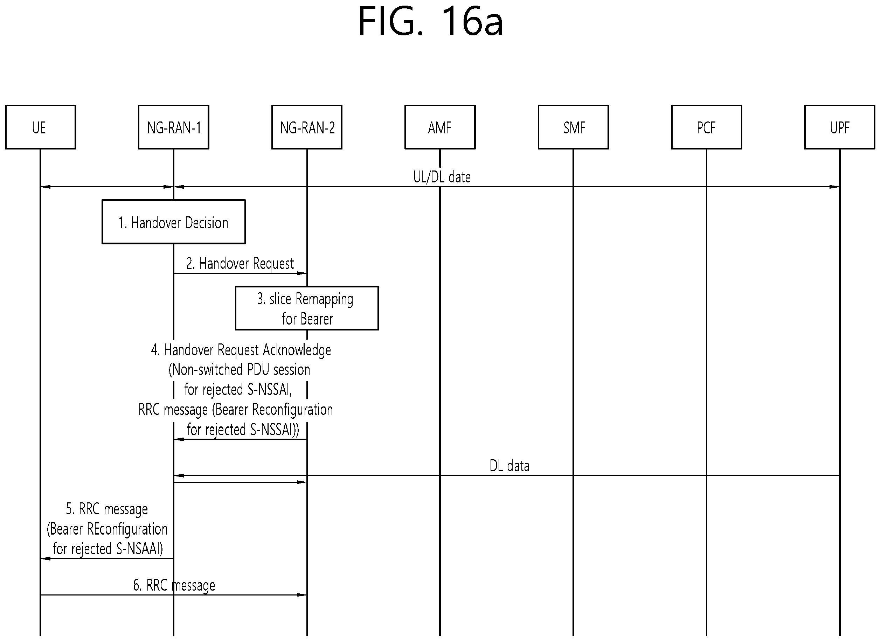

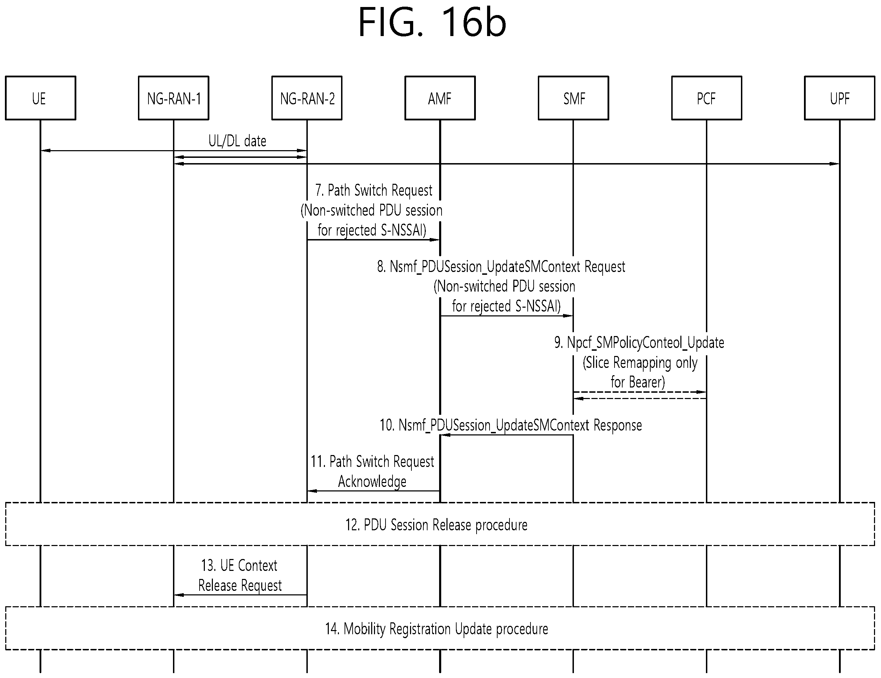

**FIGS. 16a** **and** **16b** **show an example of data forwarding for an unsupported network slice during Xn handover.**

FIGS. 16a and 16b show a method of transmitting data for a specific PDU session through a source NG-RAN when the target NG-RAN fails to remap a network slice for the specific PDU session in an Xn-based handover process.
0. The UE and UPF are transmitting data through NG-RAN-1.
1. NG-RAN-1 may decide to handover the UE to NG-RAN-2.
2. NG-RAN-1 may transmit a Handover Request message to NG-RAN-2. At this time, allowed NSSAI and candidate NSSAI information for the terminal may be included.
   Note: If configured NSSAI is received instead of candidate NSSAI from AMF during the registration process, the corresponding information can be included.
3. NG-RAN-2 determines whether it can accept the S-NSSAI for the PDU session included in the Handover Request message, and if it cannot accept it, the remapped S-NSSAI may be determined according to the remapping policy. At this time, the remapped S-NSSAI can be determined by referring to the candidate NSSAI and the allowed NSSAI received in step 2 together.
   If NG-RAN-2 (=Target NG-RAN) determines that the PDU session cannot be serviced even through network slice remapping, it may be determined that the PDU session maintains for a while so that the UE and 5GC can finish service of the corresponding PDU session. Therefore, it may be determined to temporarily create a new data transmission tunnel between NG-RAN-1 and NG-RAN-2 while maintaining the NG-U connection of NG-RAN-1 for the corresponding PDU session. And, in order to transmit data on the corresponding PDU session to the UE, NG-RAN-2 may allocate a new bearer configuration for the corresponding PDU session to the UE. At this time, bearer configuration may be assigned considering the S-NSSAI currently available in NG-RAN-2, not the original S-NSSAI, and the candidate NSSAI or configured NSSAI for the UE.
4. NG-RAN-2 may respond to NG-RAN-1 through a Handover Request Acknowledge message. At this time, the PDU session ID (for which network slice remapping has failed but it is still decided to temporarily maintain the NG-U connection through NG-RAN-1) and the corresponding rejected S-NSSAI information may be included and delivered.

Through this, NG-RAN-1 may know that handover the PDU session to NG-RAN-2 is not performed, and for a while, service is performed through NG-U connection between NG-RAN-1 and UPF, and the Xn tunnel between NG-RAN-1 and NG-RAN-1.

In addition, bearer configuration information newly allocated by NG-RAN-2 for a PDU session related to rejected S-NSSAI may be included in an RRC message to be delivered to the UE through NG-RAN-1. Through this information, it may be notified to the UE that the original S-NSSAI cannot be used in NG-RAN-2, and instead, the service for the corresponding PDU session can be provided using a bearer for another S-NSSAI for a while. Therefore, the UE may not attempt to create a new PDU session related to the original S-NSSAI later.

NG-RAN-1 may deliver downlink data received from UPF to NG-RAN-2 using an Xn tunnel for data forwarding. NG-RAN-2 may store the received data until the terminal accesses it.

5. NG-RAN-1 may deliver the RRC message received from NG-RAN-2 to the UE.

6. The UE may respond to NG-RAN-2 with an RRC message after configuration for network slice remapping is complete.

The UE and NG-RAN-2 may transmit and receive UL/DL data. NG-RAN-2 may transmit uplink data (UL data) to UPF and receive downlink data (DL data) from UPF through NG-RAN-1.

7. NG-RAN-2 may send a Path Switch Request message to AMF to inform that the UE has successfully moved to NG-RAN-2. The message may notify together, to the AMF, information about the PDU session that uses the NG-U connection of NG-RAN-1 as it is without handover to NG-RAN-2 in step 3.

8. The AMF may notify each SMF (in charge of the PDU session that the NG-RAN-1 has decided to maintain the NG-U connection as it is) that the corresponding PDU session is still connected through NG-RAN-1 even though the UE has moved to NG-RAN-2, and may deliver the reason.

9. If the terminal moves to NG-RAN-2 but decides to maintain the NG-U connection of NG-RAN-1, the SMF may notify the PCF of the situation and the reason through Npcf_SMPolicyControl_Update.

10. SMF may utilize Nsmf_PDUSession_UpdateSMContext Response or other messages to inform that the content requested by AMF has been successfully processed.

11. AMF may respond to NG-RAN-2 through a Path Switch Request Acknowledge message.

12. The UE or NG-RAN-2 or 5GC (e.g., AMF or SMF) may decide to release a PDU session using an NG-U connection of NG-RAN-1. The corresponding determination may be made based on a timer possessed by each node (e.g., UE, NG-RAN-2, AMF, SMF) or may be made based on inactivity of the corresponding PDU session.

13. When step 12 begins, NG-RAN-2 may request, to NG-RAN-1, UE context release.

14. If the UE leaves the NG-RAN-1 belonging to the existing registration area and hands over to the NG-RAN-2 belonging to the new NW area, a Mobility Registration Update procedure may be started.

NOTE: Step 14 may be executed before steps 12 and 13. In this case, AMF may reflect the result received in step 7 when determining a new Allowed NSSAI. For example, if it is determined that NG-U connection in NG-RAN-1 is still used because S-NSSAI-1 for a specific PDU session is supported by NG-RAN-1 but not supported by NG-RAN-2, AMF may include S-NSSAI-1 in the new allowed NSSAI. However, since S-NSSAI-1 is not supported in NG-RAN-2, a new indication is transmitted, to the UE, to prevent sending a new PDU session establishment request based on S-NSSAI-1 to NG-RAN-2. Also, in the handover process, as in step 5, even if the terminal does not receive information that the corresponding PDU session is not handed over to NG-RAN-2 and is still connected through the NG-U connection of NG-RAN-1, a corresponding indication from the AMF may inform so that the UE does not release the PDU session based on the existing S-NSSAI-1.

In addition, as follows, when a UE moves to an NG-RAN that does not support S-NSSAI for the PDU session currently in use, it may be considered that the S-NSSAI for the corresponding PDU session is changed so that the UE can receive the minimum service.

### <Network slice resource shortage>

The original network slice associated with the PDU session may be supported by both the source and target NG-RAN nodes. However, during handover, PDU sessions related to the network slice may be rejected due to high load related to network slice at the target NG-RAN node. As a result, service for the original slice may be interrupted. Therefore, the target NG-RAN node may perform network slice remapping. After that, the target NG-RAN node may recover sufficient resources to realize the original slice. In this case, the remapped network slice may be remapped back to the original network slice.

In case of network slice resource shortage, the remapped network slice may be remapped to the original network slice again when the NG-RAN node recovers enough resources to provide the original network slice.

However, the resources recovered at the target NG-RAN node may not be sufficient to provide all PDU sessions related to the original slice. That is, some PDU sessions may be provided in the original network slice, but other PDU sessions may still be provided in the remapped slice. Therefore, the NG-RAN may select a PDU session to be remapped to the original network slice.

In case of network slice resource shortage, a method for supporting network slice recovery (i.e., remapping a remapped slice to an original slice) may be proposed.

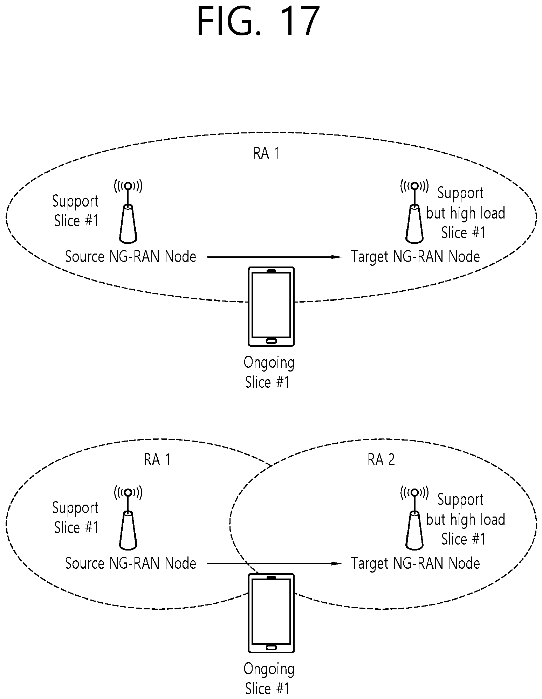

**FIG. 17** **shows an example of service interruption due to lack of network slice resources.**

The network slice currently in use by the UE may be supported by both the source and target NG-RAN nodes. Upon handover, the target node may fail to accept the UE with at least one of the S-NSSAIs that the UE is currently using in the source NG-RAN node, for example due to high load related to network slice on the target node. In this situation service for the ongoing network slice(s) that have failed may be disrupted.

### <non-supported slice>

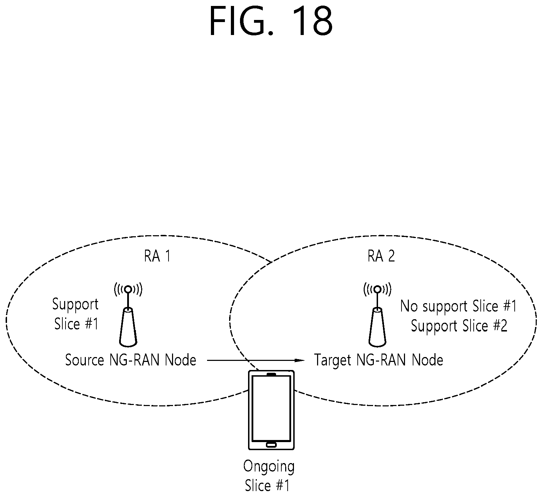

**FIG. 18** **shows an example of service interruption by an unsupported network slice.**

As shown in FIG. 18, the original network slice associated with the ongoing PDU session may be supported only by the source NG-RAN node. Since the target NG-RAN node does not support the original network slice, the remapped network slice may be used instead of the original network slice to support service continuity for the ongoing PDU session.

When the UE moves to the target NG-RAN node in RA2, the target NG-RAN node may remap the original network slice (Slice #1) associated with PDU session #1 to the remapped slice (slice #2). After the Inter-RA handover is completed, the UE may start a Mobility Registration Update procedure to align the network slice supported by the new RA2 between the UE and the network. The UE may include the S-NSSAI applicable to each active PDU session in the Requested NSSAI. Since PDU session #1 is ongoing in the target NG-RAN node and the UE does not know the network slice remapping for the PDU session, the UE may transmit the Requested NSSAI (= {Slice #1}) and the list of PDU sessions to be activated (= {PDU session #1}) together with a registration request message.

Based on information from the UE, subscription information from the UDM and local configuration, the AMF may determine an allowed NSSAI for the UE. Since slice #1 is not supported by NG-RAN nodes, slice #1 may not be included in the allowed NSSAI. When the UE can no longer use the slice, the AMF may inform the SMF of the PDU session ID of which the PDU session corresponding to the corresponding S-NSSAI should be released. SMF may release the PDU session. Accordingly, PDU session #1 may be released by the network during a Mobility Registration Update procedure. However, in inter-RA handover, the target NG-RAN node may indicate to AMF that the network slice related to PDU session #1 has been remapped to slice #2. Therefore, even if slice #1 is no longer available for the UE, the network slice remapping instruction may prevent the AMF from requesting the SMF to release PDU session #1.

Even if the original network slice is not included in the allowed NSSAI, the PDU session related to the original network slice may be maintained in AMF based on the slice remapping indication of the NG-RAN node.

However, from the UE point of view, there may be a mismatch between the allowed NSSAI and the network slice associated with the active PDU session. The UE receives an allowed NSSAI that does not include slice #1, but may still have PDU session #1 associated with slice #1. PDU session #1 may be released from the UE as follows.

For each PDU session active in the UE, if the allowed NSSAI does not contain any of the following:
a) S-NSSAI matching the S-NSSAI of the PDU session;
b) a mapped S-NSSAI that matches the mapped S-NSSAI of the PDU session;

Then, the UE may perform release of all such PDU sessions except for the case where there is an emergency PDU session.

If the original network slice is not included in the allowed NSSAI, the UE may perform release of the PDU session associated with the original slice.

During a Mobility Registration Update procedure after Inter-RA handover, if a PDU session related to network slice remapping is released in the UE, it is difficult to ensure service continuity in an unsupported network slice. To avoid this problem, the UE must be aware of network slice remapping. The UE may know the slice remapping decision from the network through RRC messages or NAS signaling.

To avoid discrepancies between the allowed NSSAI and the network slice associated with an active PDU session, the UE must be aware of slice remapping. To this end, the NG-RAN or AMF may notify the UE whenever a network slice remapping event occurs. This may cause additional signaling between the UE and the network. URSP rules to route traffic related to the remapped network slice may be needed to be updated. Therefore, there may be significant UE impact.

The UE's awareness of network slice remapping may cause significant UE impact. Whether and how the UE should be aware of network slice remapping may be suggested.

### <UE Awareness of Slice Remapping>

The AMF must inform the UE of the network slice remapping decision using NAS signaling in the Mobility Registration Update procedure.

However, even if slice #1 is not supported by the target NG-RAN node, AMF may include slice #1 in Allowed NSSAI during a Mobility Registration Update procedure. In this case, the UE may initiate a PDU session establishment procedure to establish another new PDU session related to slice #1. However, since the target NG-RAN node does not support Slice #1, it may reject the UE's PDU session establishment request. Thus, this may cause unnecessary signaling between the UE and the network. In order for the UE to request PDU session establishment for slice #1, the AMF may indicate to the UE that new PDU session establishment for slice #1 is not allowed due to slice remapping for slice #1.

During the Mobility Registration Update procedure, AMF may notify the UE of network slice remapping regardless of Slice #1 included in Allowed NSSAI.

It may be suggested that AMF instructs the UE to make a network slice remapping decision through NAS signaling.

### <Network slice remapping message sequence>

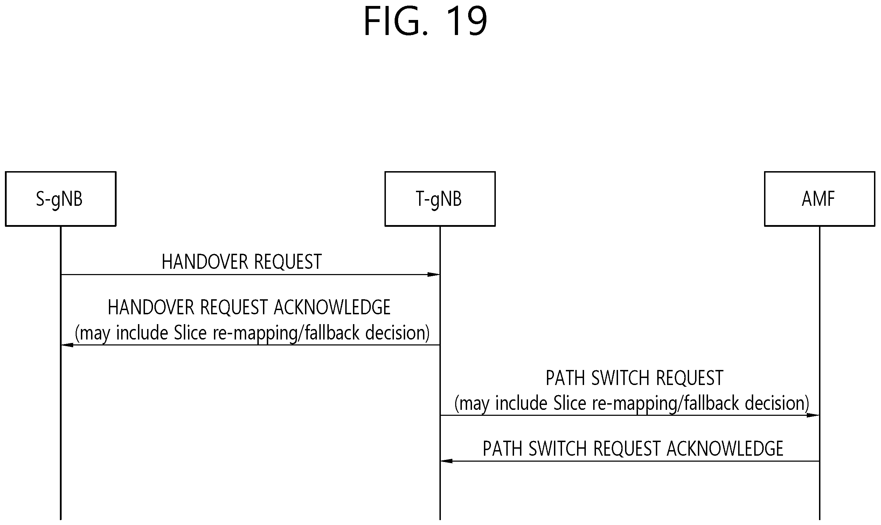

**FIG. 19** **shows a first example of network slice remapping or fallback determined by the T-gNB.**

The S-gNB may transmit a HANDOVER REQUEST message to the T-gNB.

If the UE's ongoing network slice(s) are rejected by the target gNB based on the network slice remapping policy, the T-gNB may determine network slice remapping or fallback. The T-gNB may transmit the network slice remapping or fallback decision to the S-gNB by including it in the HANDOVER REQUEST ACKNOWLEDGE message.

The T-gNB may send a network slice remapping or fallback decision to the AMF through a PATH SWITCH REQUEST message.

AMF may respond with a PATH SWITCH REQUEST ACKNOWLEDGE message.

AMF may reject the PDU session in the PDU Session Resource Released List IE.

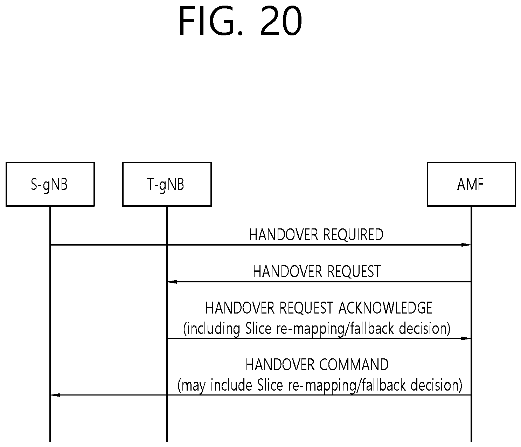

**FIG. 20** **shows a second example of network slice remapping or fallback determined by the T-gNB.**

The S-gNB may transmit a HANDOVER REQUIRED message to the T-gNB.

AMF may transmit a HANDOVER REQUEST message to the T-gNB.

If the network slice (s) in progress of the UE is rejected by the target gNB based on the network slice remapping policy, the T-gNB may include the remapping or fallback decision in the HANDOVER REQUEST ACKNOWLEDGE message sent to the AMF.

AMF may send a network slice remapping or fallback decision to the S-gNB through a HANDOVER COMMAND message.

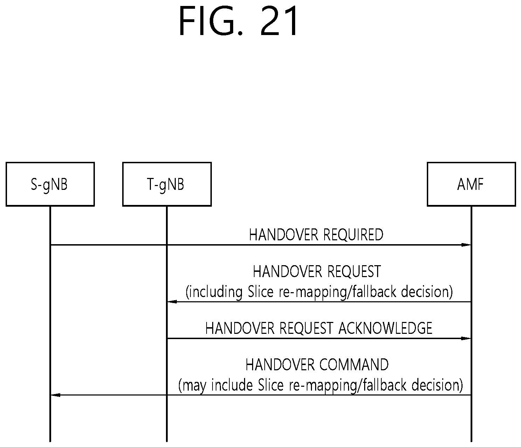

**FIG. 21** **shows an example of network slice remapping or fallback determined by AMF.**

The S-gNB may transmit a HANDOVER REQUIRED message to the AMF.

If the UE's ongoing network slice(s) is not supported by the T-gNB, the AMF may determine network slice remapping or fallback. In addition, the decision may be included in a HANDOVER REQUEST message and transmitted to the T-gNB.

The T-gNB may respond to the AMF with a HANDOVER REQUEST ACKNOWLEDGE message.

The AMF may transmit a network slice remapping or fallback decision to the S-gNB through a HANDOVER COMMAND message.

After the handover between RAs is completed, the UE may initiate a Mobility Registration Update procedure to align allowed NSSAIs between the UE and the network. According to the network slice remapping decision, the AMF may determine a newly allowed NSSAI for the UE. However, the terminal may not be aware of the network slice remapping decision. Therefore, since the original network slice is not included in the allowed NSSAI, the UE may perform local release of the PDU session related to the original network slice. To ensure service continuity in an unsupported network slice scenario, the AMF may inform the UE of the network slice remapping decision through NAS signaling during a Mobility Registration Update procedure.

The configuration of the target NG-RAN may can be assumed to be more static since the remapping policy must be verified by the tenant or operator. Therefore, the NG-RAN node may be configured in advance with a re-mapping policy by OAM. In this option, the unit of remapping policy is per network slice. That is, for each supported S-NSSAI, the target NG-RAN node can be configured with a list of possible remapped S-NSSAIs as follows.
- S-NSSAI 1 <> remapped list (S-NSSAI 10, S-NSSAI 11)
- S-NSSAI 2 <> remapped list (S-NSSAI 12, S-NSSAI 13)

The NG-RAN node may receive in advance the re-mapping policy in the NG Setup Response message (or any update in the AMF configuration Update message) from the CN. In this option the granularity of the re-mapping policy is the slice for each S-NSSAI supported by the target NG-RAN node. the CN may include in the NG Setup Response (respectively AMF Configuration Update) message an associated list of possible re-mapped S-NSSAI(s).

With NG handover request signaling, at the time of handover, the CN may include in the NG Handover Request message the current PDU Session, the associated S-NSSAI and also the list of S-NSSAI(s) to which this PDU session can be re-mapped.

In this option the granularity of the re-mapping policy can be either:
- Per PDU session (using same principles as slice association in PDU Session Setup)
- Per UE: even though signaled for the involved PDU session, the choice of possible re-mapped slices for a given slice is a general policy for the UE.

Example of per UE policy:
- UE 1, any PDU session of S-NSSAI 1 <> re-mapped list (S-NSSAI 10, S-NSSAI 11)
- UE 2, any PDU session of S-NSSAI 1 <> re-mapped list (S-NSSAI 12, S-NSSAI 13)

Example of per PDU session policy:
- UE 1, PDU Session 1, S-NSSAI 1 <> re-mapped list (S-NSSAI 10, S-NSSAI 11)
- UE 1, PDU Session 2, S-NSSAI 1 <> re-mapped list (S-NSSAI 12, S-NSSAI 13)
- UE 2, PDU Session 3, S-NSSAI 1 <> re-mapped list (S-NSSAI 14, S-NSSAI 15)

As a signaling from the source NG-RAN node, When the PDU session is created in the source NG-RAN node, the CN may include in the NGAP PDU Session Resource Setup Request message (or the Initial Context Setup Request message or the NG Handover Request message) the S-NSSAI associated with the PDU session . The list of S-NSSAI(s) to which this PDU session can be re-mapped. Also, in order to prioritize the PDU sessions related to the re-mapped S-NSSAI when the re-mapped S-NSSAI is reassigned to the original S-NSSAI, the 5GC may provide to the NG-RAN the slice recovery priority for each PDU session based on e.g., the subscription.

At the time of subsequent Xn handover, the source NG-RAN node may include in the Xn Handover Request message the current PDU Session, the associated S-NSSAI and also the list of S-NSSAI(s) to which this PDU session can be mapped

In this option the granularity of the re-mapping policy can be either:
- Per PDU session (using same principles as slice association in PDU Session Setup)
- Per UE: even though signaled for the involved PDU session, the choice of possible re-mapped slices for a given slice is a general policy for the UE.

Even if the terminal moves to an NG-RAN that does not support S-NSSAI for the PDU session currently in use, because service can be continuously provided, unnecessary latency may be reduced because it is not needed process of establishing a new PDU session. In addition, since it is possible to ensure that the terminal selects a remapped slice within the network slice list available for use, it is possible to prevent a case of wasting network slice resources due to incorrect remapped slice selection.

The drawings may be executed individually or together with other drawings.

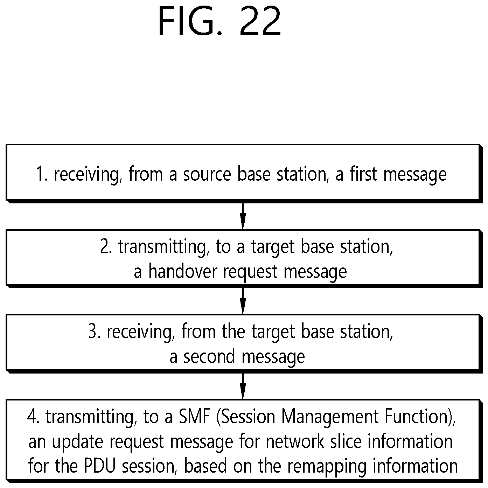

**FIG. 22** **shows the procedure of AMF for the disclosure of this specification.**
1. The AMF may receive, from a source base station, a first message.
   The first message may include information indicating that a UE (User Equipment) needs to perform handover.
2. The AMF may transmit, to a target base station, a handover request message.
   The handover request message may include information on a first network slice related to PDU (Protocol Data Unit) session that UE wants to use.
3. The AMF may receive, from the target base station, a second message.

The second message may include remapping information.

The remapping information may include information indicating that remapping from the first network slice to a second network slice has been performed.

4. The AMF may transmit, to a SMF (Session Management Function), an update request message for network slice information for the PDU session, based on the remapping information.

The network slice information may be updated by PCF (Policy Control Function) and transmitted to the UE.

The AMF may determine Allowed NSSAI (Network Slice Selection Assistance Information) including the first network slice information or the second network slice information.

The AMF may transmit, to the UE, the Allowed NSSAI.

The AMF may transmit, to the UE, a first indication instructing the UE to skip establishment request for a new PDU session related to the first network slice, based on the Allowed NSSAI including the first network slice information.

The AMF may transmit, to the UE, a second indication instructing the UE to skip release for the PDU session, based on the Allowed NSSAI including the second network slice information.

The PCF may trigger to update for URSP (UE Route Selection Policy) rule for the PDU session to be used for service request for the second network slice.

The PCF may trigger to update for URSP rule for a new PDU session to be created for service request for the second network slice.

The AMF may receive, from the target base station, recovery information.

The recovery information may include information indicating that remapping from the second network slice to the first network slice has been performed for the PDU session.

The AMF may transmit, to the SMF, a request message for new update for the network slice information, based on the recover information.

The network slice information may be updated by the PCF and transmitted to the UE.

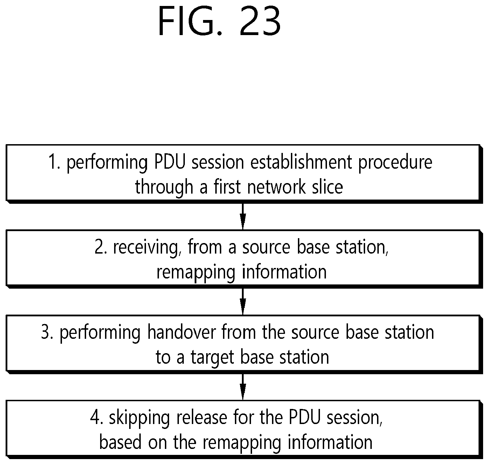

**FIG. 23** **shows the procedure of UE for the disclosure of this specification.**
1. The UE may perform PDU session establishment procedure through a first network slice.
2. The UE may receive, from a source base station, remapping information.

The remapping information may be updated by PCF (Policy Control Function).

The remapping information may include information indicating that remapping from the first network slice to a second network slice has been performed.

3. The UE may perform handover from the source base station to a target base station.

4. The UE may skip release for the PDU session, based on the remapping information.

The UE may receive, from an AMF (access and mobility management function), Allowed Network Slice Selection Assistance Information (NSSAI) including the first network slice information or the second network slice information.

The UE may receive, from the AMF, a first indication instructing to skip establishment request for a new PDU session related to the first network slice, based on the Allowed NSSAI including the first network slice information.

The UE may receive, from the AMF, a second indicator instructing to skip release for the PDU session, based on the Allowed NSSAI including the second network slice information.

Hereinafter, an AMF for providing communication in a wireless communication system according to some embodiments of the present specification will be described.

For example, the AMF may include a processor, transceiver and memory.

For example, a processor may be configured to be operably coupled with a memory and a processor.

The AMF receives, from a source base station, a first message, wherein the first message includes information indicating that a UE (User Equipment) needs to perform handover.

The AMF may transmit, to a target base station, a handover request message.The handover request message may include information on a first network slice related to PDU (Protocol Data Unit) session that UE wants to use.

The AMF may receive, from the target base station, a second message. The second message may include remapping information. The remapping information may include information indicating that remapping from the first network slice to a second network slice has been performed.

The AMF may transmit, to a SMF (Session Management Function), an update request message for network slice information for the PDU session, based on the remapping information. The network slice information may be updated by PCF (Policy Control Function) and transmitted to the UE.

Hereinafter, a non-volatile computer-readable medium storing one or more instructions for providing communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the UE.

The stored one or more stored instructions cause processors to: performing PDU session establishment procedure through a first network slice; receiving, from a source base station, remapping information, wherein the remapping information is updated by PCF (Policy Control Function), wherein the remapping information includes information indicating that remapping from the first network slice to a second network slice has been performed; performing handover from the source base station to a target base station; skipping release for the PDU session, based on the remapping information.

The present specification may have various effects.

For example, through the procedure disclosed in this specification, it is possible to increase communication efficiency by continuing to use the PDU session previously used by the terminal through network remapping.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by an AMF (Access and Mobility management Function), comprising:
receiving, from a source base station, a first message,
wherein the first message includes information indicating that a UE (User Equipment) needs to perform handover;
transmitting, to a target base station, a handover request message,
wherein the handover request message includes information on a first network slice related to PDU (Protocol Data Unit) session that UE wants to use;
receiving, from the target base station, a second message,
wherein the second message includes remapping information,
wherein the remapping information includes information indicating that remapping from the first network slice to a second network slice has been performed;
transmitting, to a SMF (Session Management Function), an update request message for network slice information for the PDU session, based on the remapping information,
wherein the network slice information is updated by PCF (Policy Control Function) and is transmitted to the UE.

2. The method of claim 1, further comprising:
determining Allowed NSSAI (Network Slice Selection Assistance Information) including the first network slice information or the second network slice information;
transmitting, to the UE, the Allowed NSSAI;
transmitting, to the UE, a first indication instructing the UE to skip establishment request for a new PDU session related to the first network slice, based on the Allowed NSSAI including the first network slice information;
transmitting, to the UE, a second indication instructing the UE to skip release for the PDU session, based on the Allowed NSSAI including the second network slice information.

3. The method of claim 1,
wherein the PCF triggers to update for URSP (UE Route Selection Policy) rule for the PDU session to be used for service request for the second network slice.

4. The method of claim 1,
wherein the PCF triggers to update for URSP rule for a new PDU session to be created for service request for the second network slice.

5. The method of claim 1, further comprising:
receiving, from the target base station, recovery information,
wherein the recovery information includes information indicating that remapping from the second network slice to the first network slice has been performed for the PDU session;
transmitting, to the SMF, a request message for new update for the network slice information, based on the recover information,
wherein the network slice information is updated by the PCF and is transmitted to the UE.

6. A method for performing communication, performed by a UE (User Equipment), comprising:
performing PDU session establishment procedure through a first network slice;
receiving, from a source base station, remapping information,
wherein the remapping information is updated by PCF (Policy Control Function),
wherein the remapping information includes information indicating that remapping from the first network slice to a second network slice has been performed;
performing handover from the source base station to a target base station;
skipping release for the PDU session, based on the remapping information.

7. The method of claim 6,
receiving, from an AMF (access and mobility management function), Allowed Network Slice Selection Assistance Information (NSSAI) including the first network slice information or the second network slice information;
receiving, from the AMF, a first indication instructing to skip establishment request for a new PDU session related to the first network slice, based on the Allowed NSSAI including the first network slice information;
receiving, from the AMF, a second indicator instructing to skip release for the PDU session, based on the Allowed NSSAI including the second network slice information.

8. An AMF (Access and Mobility management Function), comprising:
a transceiver to transmit a signal and to receive a signal; and
a processor to control the transceiver,
wherein the processor performs operation comprising:
receiving, from a source base station, a first message,
wherein the first message includes information indicating that a UE (User Equipment) needs to perform handover;
transmitting, to a target base station, a handover request message,
wherein the handover request message includes information on a first network slice related to PDU (Protocol Data Unit) session that UE wants to use;
receiving, from the target base station, a second message,
wherein the second message includes remapping information,
wherein the remapping information includes information indicating that remapping from the first network slice to a second network slice has been performed;
transmitting, to a SMF (Session Management Function), an update request message for network slice information for the PDU session, based on the remapping information,
wherein the network slice information is updated by PCF (Policy Control Function) and is transmitted to the UE.

9. The AMF of claim 8,
wherein the operation further comprising:
determining Allowed NSSAI (Network Slice Selection Assistance Information) including the first network slice information or the second network slice information;
transmitting, to the UE, the Allowed NSSAI;
transmitting, to the UE, indication that the first network slice information means the second network slice for the PDU session.

10. The AMF of claim 8,
wherein the second network slice is updated URSP (UE Route Selection Policy) rule to use the PDU session by the PCF.

11. The AMF of claim 8,
wherein the operation further comprising:
receiving, from the target base station, recovery information,
wherein the recovery information includes information indicating that remapping from the second network slice to the first network slice has been performed for the PDU session;
transmitting, to the SMF, a request message for new update for the network slice information, based on the recover information,
wherein the network slice information is updated by the PCF and is transmitted to the UE.

12. A UE (user equipment), comprising:
a transceiver to transmit a signal and to receive a signal; and
a processor to control the transceiver,
wherein the processor performs operation comprising:
performing PDU session establishment procedure through a first network slice;
receiving, from a source base station, remapping information,
wherein the remapping information includes information indicating that remapping from the first network slice to a second network slice has been performed;
performing handover from the source base station to a target base station;
skipping release for the PDU session, based on the remapping information.

13. The UE of claim 12,
wherein the operation further comprising:
receiving, from an AMF (access and mobility management function), Allowed Network Slice Selection Assistance Information (NSSAI) including the first network slice information or the second network slice information;
receiving, from the AMF, indication that the first network slice information means the second network slice for the PDU session.

14. An apparatus in mobile communication, comprising:
at least one processor; and
at least one memory storing instructions and operably electrically connectable with the
at least one processor, based on the instructions being operated by the at least one processor, performed operation comprising:
performing PDU session establishment procedure through a first network slice;
receiving, from a source base station, remapping information,
wherein the remapping information is updated by PCF (Policy Control Function),
wherein the remapping information includes information indicating that remapping from the first network slice to a second network slice has been performed;
performing handover from the source base station to a target base station;
skipping release for the PDU session, based on the remapping information.

15. A non-volatile computer readable storage medium having recorded instructions,
wherein the instructions, based on being executed by one or more processors, cause the one or more processors to:
performing PDU session establishment procedure through a first network slice;
receiving, from a source base station, remapping information,
wherein the remapping information is updated by PCF (Policy Control Function),
wherein the remapping information includes information indicating that remapping from the first network slice to a second network slice has been performed;
performing handover from the source base station to a target base station;
skipping release for the PDU session, based on the remapping information.
